(19) **Europäisches Patentamt European Patent Office Office européen des brevets**

(11) **EP 4 712 392 A1**

(12) **EUROPEAN PATENT APPLICATION**
published in accordance with Art. 153(4) EPC

(43) Date of publication:
**18.03.2026 Bulletin 2026/12**

(21) Application number: **24737852.4**

(22) Date of filing: **10.05.2024**

(51) International Patent Classification (IPC):
*H04L 5/00* (2006.01)    *H04W 72/232* (2023.01)

(52) Cooperative Patent Classification (CPC):
**H04L 5/00; H04W 72/232**

(86) International application number:
**PCT/KR2024/006410**

(87) International publication number:
**WO 2024/237608 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.05.2023 US 202363466218 P**
**11.08.2023 KR 20230105255**

(71) Applicant: **LG ELECTRONICS, INC.**
**Seoul 07336 (KR)**

(72) Inventors:
• **KIM, Jaehyung**
  **Seoul 06772 (KR)**
• **YANG, Suckchel**
  **Seoul 06772 (KR)**
• **AHN, Seungjin**
  **Seoul 06772 (KR)**

(74) Representative: **Maikowski & Ninnemann Patentanwälte Partnerschaft mbB**
**Postfach 15 09 20**
**10671 Berlin (DE)**

(54) **APPARATUS AND METHOD FOR TRANSMITTING AND RECEIVING DOWNLINK CONTROL CHANNEL FOR NARROWBAND WIRELESS COMMUNICATION IN WIRELESS COMMUNICATION SYSTEM**

(57)    There is provided a method performed by a user equipment (UE) in a wireless communication system. The method comprises receiving, from a base station (BS), a master information block (MIB) including configuration information related to a number of consecutive resource blocks for control resource set (CORESET) #0; and receiving, from the BS, a physical downlink control channel (PDCCH) through the CORESET #0 including second resource blocks excluding first resource blocks from the resource blocks based on i) the number of the resource blocks and ii) a channel bandwidth. A puncturing based on a specific number of the first resource blocks among the resource blocks is assumed for the CORESET #0. The PDCCH is received through one or more PDCCH candidates including control channel elements (CCEs) in a search space related to the CORESET #0. Indexes of the CCEs related to the one or more PDCCH candidates are based on a number of the CCEs, and the number of the CCEs is based on the CORESET #0 before the puncturing.

[FIG. 15]

**Description**

[Technical Field]

The present disclosure relates to a wireless communication system. More particularly, the present disclosure relates to a device and method for transmitting and receiving a downlink control channel for narrowband wireless communication in a wireless communication system.

[Background Art]

In order to efficiently support various use cases (e.g., IoT, wearable, etc.) in 5G in terms of cost/complexity, types of terminals with reduced cost/complexity are being introduced. Newly introduced types of terminals may reduce their maximum supported bandwidth and may not be able to receive all SSBs.

There is a demand from operators to apply the 5G NR system to wireless communication for railway, utility/infrastructure network, public safety, etc. using the existing narrowband spectrum (< 5 MHz). Reflecting these requirements, standardization work is underway in Rel-18 to support bandwidths (e.g., -3 MHz) less than 5 MHz in the NR system.

[Disclosure]

[Technical Problem]

In order to solve the above-described and other problems, the present disclosure provides a device and method for transmitting and receiving a downlink control channel for narrowband wireless communication in a wireless communication system.

The present disclosure provides a device and method for contributing to the expansion of application use cases of the NR system by solving problems that may occur when supporting narrowband terminal/spectrum scenarios in a wireless communication system.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[Technical Solution]

According to various embodiments of the present disclosure, there is provided a method performed by a user equipment (UE) in a wireless communication system, the method comprising receiving, from a base station (BS), a master information block (MIB) including configuration information related to a number of consecutive resource blocks for control resource set (CORESET) #0; and receiving, from the BS, a physical downlink control channel (PDCCH) through the CORESET #0 including second resource blocks excluding first resource blocks from the resource blocks based on i) the number of the resource blocks and ii) a channel bandwidth, wherein a puncturing based on a specific number of the first resource blocks among the resource blocks is assumed for the CORESET #0, wherein the PDCCH is received through one or more PDCCH candidates including control channel elements (CCEs) in a search space related to the CORESET #0, wherein indexes of the CCEs related to the one or more PDCCH candidates are based on a number of the CCEs, and wherein the number of the CCEs is based on the CORESET #0 before the puncturing.

According to various embodiments of the present disclosure, there is provided a method performed by a base station (BS) in a wireless communication system, the method comprising transmitting, to a user equipment (UE), a master information block (MIB) including configuration information related to a number of consecutive resource blocks for control resource set (CORESET) #0; and transmitting, to the UE, a physical downlink control channel (PDCCH) through the CORESET #0 including second resource blocks excluding first resource blocks from the resource blocks based on i) the number of the resource blocks and ii) a channel bandwidth, wherein a puncturing based on a specific number of the first resource blocks among the resource blocks is assumed for the CORESET #0, wherein the PDCCH is transmitted through one or more PDCCH candidates including control channel elements (CCEs) in a search space related to the CORESET #0, wherein indexes of the CCEs related to the one or more PDCCH candidates are based on a number of the CCEs, and wherein the number of the CCEs is based on the CORESET #0 before the puncturing.

According to various embodiments of the present disclosure, there is provided a user equipment in a wireless communication system, the UE comprising a transceiver, at least one processor, and at least one memory operably connectable to the at least one processor, wherein the at least one memory is configured to store instructions performing operations based on being executed by the at least one processor, and the operations comprise all steps of a method of operating the UE according to various embodiments of the present disclosure.

According to various embodiments of the present disclosure, there is provided a base station in a wireless communication system, the BS comprising a transceiver, at least one processor, and at least one memory operably connectable to the at least one processor, wherein the at least one memory is configured to store instructions performing operations based on being executed by the at least one processor, and the operations comprise all steps of a method of operating the BS according to various embodiments of the present disclosure.

According to various embodiments of the present disclosure, there is provided a control device controlling a user equipment in a wireless communication system, the control device comprising at least one processor and at least one memory operably connectable to the at least one processor, wherein the at least one memory is configured to store instructions performing operations based on being executed by the at least one processor, and the operations comprise all steps of a method of operating the UE according to various embodiments of the present disclosure.

According to various embodiments of the present disclosure, there is provided a control device controlling a base station in a wireless communication system, the control device comprising at least one processor and at least one memory operably connectable to the at least one processor, wherein the at least one memory is configured to store instructions performing operations based on being executed by the at least one processor, and the operations comprise all steps of a method of operating the BS according to various embodiments of the present disclosure.

According to various embodiments of the present disclosure, there are provided one or more non-transitory computer readable mediums storing one or more instructions, wherein the one or more instructions are configured to perform operations based on being executed by one or more processors, and the operations comprise all steps of a method of operating the UE according to various embodiments of the present disclosure.

According to various embodiments of the present disclosure, there are provided one or more non-transitory computer readable mediums storing one or more instructions, wherein the one or more instructions are configured to perform operations based on being executed by one or more processors, and the operations comprise all steps of a method of operating the BS according to various embodiments of the present disclosure.

[Advantageous Effects]

In order to solve the above-described and other problems, the present disclosure can provide a device and method for transmitting and receiving a downlink control channel for narrowband wireless communication in a wireless communication system.

The present disclosure can provide a device and method for contributing to the expansion of application use cases of the NR system by solving problems that may occur when supporting narrowband terminal/spectrum scenarios in a wireless communication system.

[Description of Drawings]

The accompanying drawings, which are included to provide a further understanding of the present disclosure and constitute a part of the detailed description, illustrate embodiments of the present disclosure and serve to explain technical features of the present disclosure together with the description. Technical features of the present disclosure are not limited to specific drawings, and features disclosed in each drawing can be combined with each other to form a new embodiment. Reference numerals in each drawing may denote structural elements.

FIG. 1 illustrates physical channels used in a system applicable to the present disclosure and an example of a general signal transmission method using the physical channels.

FIG. 2 illustrates an example of a radio frame structure used in a system applicable to the present disclosure.

FIG. 3 illustrates an example of a slot structure used in a system applicable to the present disclosure.

FIG. 4 illustrates an example of a slot structure of a radio frame used in a system applicable to the present disclosure.

FIG. 5 illustrates an example of a process for a UE to receive DL signals/channels in an initial access procedure in a system applicable to the present disclosure.

FIG. 6 illustrates an example of time/frequency structure of a synchronization signal block (SSB) in a system applicable to the present disclosure.

FIG. 7 illustrates an example of a method of configuring a PBCH transmission RB subset using 12 PRBs including PSS/SSS in a system applicable to the present disclosure.

FIG. 8 illustrates an example of a method of configuring a PBCH transmission RB subset using 15 PRBs including PSS/SSS and determining it using center 12 PRBs (for PSS/SSS) and lower 3 PRBs in a system applicable to the present disclosure.

FIG. 9 illustrates an example of a method of configuring a PBCH transmission RB subset using 15 PRBs including PSS/SSS and determining it using center 12 PRBs (for PSS/SSS) and lower 2 PRBs + higher 1 PRB in a system applicable to the present disclosure.

FIG. 10 illustrates an example of a method of defining a punctured PBCH including 12 PRBs and then applying 12-RB PBCH to a narrowband, in which a channel BW is 12 PRBs, in a system applicable to the present disclosure.

FIG. 11 illustrates an example of a method of defining a punctured PBCH including 12 PRBs and then applying 12-RB PBCH to a narrowband, in which a channel BW is 15 PRBs, in a system applicable to the present disclosure.

FIG. 12 illustrates an example of a method of applying 12-RB PBCH when a narrowband channel BW is less than 15 PRBs in a system applicable to the present disclosure.

FIG. 13 illustrates an example of a method of applying 15-RB PBCH when a narrowband channel BW is less than 15 PRBs in a system applicable to the present disclosure.

FIG. 14 illustrates an example of PDCCH transmission/reception frequency domain in a system applicable to the present disclosure.

FIG. 15 illustrates an example of a method of applying CORESET #0 with CORESET #0 size = 12 PRBs when supporting 12-RB PBCH in a narrowband, in which a carrier BW is 12 PRBs, in a system applicable to the present disclosure.

FIG. 16 illustrates an example of an operation process of a UE in a system applicable to the present disclosure.

FIG. 17 illustrates an example of an operation process of a base station in a system applicable to the present disclosure.

FIG. 18 illustrates an example of a structure of a first device and a second device in a system applicable to the present disclosure.

[Mode for Invention]

In various embodiments of the present disclosure, "A or B" may mean "only A," "only B" or "both A and B." In other words, in various embodiments of the present disclosure, "A or B" may be interpreted as "A and/or B." For example, in various embodiments of the present disclosure, "A, B or C" may mean "only A," "only B," "only C" or "any combination of A, B and C."

A slash (/) or comma used in various embodiments of the present disclosure may mean "and/or." For example, "A/B" may mean "A and/or B." Hence, "A/B" may mean "only A," "only B" or "both A and B." For example, "A, B, C" may mean "A, B, or C."

In various embodiments of the present disclosure, "at least one of A and B" may mean "only A," "only B" or "both A and B." In addition, in various embodiments of the present disclosure, the expression of "at least one of A or B" or "at least one of A and/or B" may be interpreted in the same meaning as "at least one of A and B."

Further, in various embodiments of the present disclosure, "at least one of A, B, and C" may mean "only A," "only B," "only C" or "any combination of A, B and C." In addition, "at least one of A, B or C" or "at least one of A, B and/or C" may mean "at least one of A, B, and C."

Further, parentheses used in various embodiments of the present disclosure may mean "for example." Specifically, when "control information (PDCCH)" is described, "PDCCH" may be proposed as an example of "control information." In other words, "control information" in various embodiments of the present disclosure is not limited to "PDCCH," and "PDDCH" may be proposed as an example of "control information." In addition, even when "control information (i.e., PDCCH)" is described, "PDCCH" may be proposed as an example of "control information."

Technical features described individually in one drawing in various embodiments of the present disclosure may be implemented individually or simultaneously.

## General Signal Transmission Method in 3GPP

## Physical Channels and General Signal Transmission

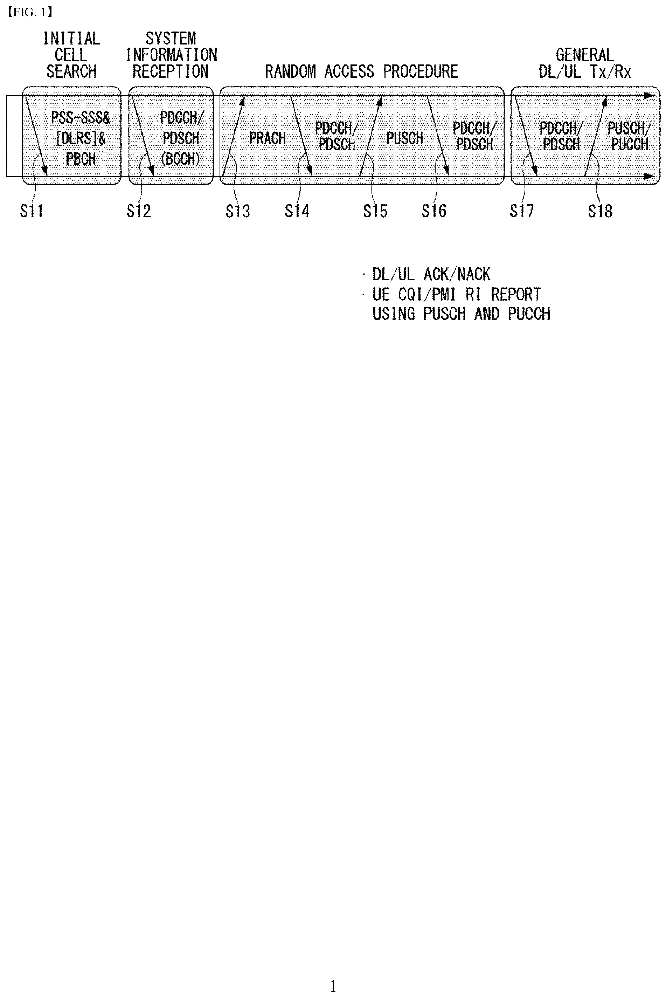

FIG. 1 illustrates physical channels used in a system applicable to the present disclosure and an example of a general signal transmission method using the physical channels. More specifically, FIG. 1 illustrates physical channels used in the 3GPP system and general signal transmission.

FIG. 1 illustrates physical channels used in the 3GPP system and general signal transmission. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

A UE that is powered on again while being powered off or enters a new cell performs an initial cell search operation such as synchronizing with a base station (BS) in S11. To this end, the UE receives a primary synchronization channel (PSCH) and a secondary synchronization channel (SSCH) from the base station to synchronize with the base station and acquires information such as a cell identity (ID), etc. Further, the UE may receive a physical broadcast channel (PBCH) from the base station and acquire in-cell broadcast information. The UE may receive a downlink reference signal (DL RS) in an initial cell search step to check a downlink channel state.

The UE that completes the initial cell search may receive a physical downlink control channel (PDCCH) and a physical downlink shared channel (PDSCH) corresponding to the PDCCH to acquire more detailed system information, in S12.

Next, the UE may perform a random access procedure in order to complete an access to the base station, in S13 to S16. Specifically, the UE may transmit a preamble on a physical random access channel (PRACH) in S13, and receive a random access response (RAR) for the preamble on the PDCCH and the PDSCH corresponding to the PDCCH in S14. Thereafter, the UE may transmit a physical uplink shared channel (PUSCH) using scheduling information within the RAR in S15, and perform a contention resolution procedure such as the PDCCH and the PDSCH corresponding to the PDCCH in S16.

Next, the UE that performs the above-described procedure may perform PDCCH/PDSCH reception S17 and PUSCH/physical uplink control channel (PUCCH) transmission S18, as a general uplink/downlink signal transmission procedure. Control information that the UE transmits to the base station is referred to as uplink control information (UCI). The UCI includes hybrid automatic repeat and request (HARQ) acknowledgement/negative ACK (ACK/NACK), scheduling request (SR), channel state information (CSI), etc. The CSI includes a channel quality indication (CQI), a precoding matrix indicator (PMI), a rank indicator (RI), etc. The UCI is generally transmitted on the PUCCH, but if control information and data need to be transmitted at the same time, the UCI may be transmitted on the PUSCH. The UE may aperiodically transmit the UCI on the PUSCH based on a request/indication of the network.

The UE monitors a set of PDCCH candidates in monitoring occasions configured to one or more control element sets (CORESETs) on a serving cell based on corresponding search space configurations. The set of PDCCH candidates to be monitored by the UE is defined in terms of search space sets, and the search space set may be a common search space set or a UE-specific search space set. The CORESET consists of a set of (physical) resource blocks with a duration of one to three OFDM symbols. A network may configure the UE to have a plurality of CORESETs. The UE monitors PDCCH candidates in one or more search space sets. Here, the monitoring means attempting to decode PDCCH candidate(s) in a search space. If the UE succeeds in decoding one of the PDCCH candidates in a search space, the UE determines that a PDCCH has been detected from the PDCCH candidates and performs PDSCH reception or PUSCH transmission based on DCI within the detected PDCCH.

The PDCCH may be used to schedule DL transmissions on PDSCH and UL transmissions on PUSCH. The DCI on the PDCCH includes downlink assignment (i.e., DL grant) related to a downlink shared channel and including at least a modulation and coding format and resource allocation information, or an uplink grant (UL grant) related to an uplink shared channel and including a modulation and coding format and resource allocation information. The DCI has different formats depending on its purpose.

The SSB is periodically transmitted in accordance with SSB periodicity. A default SSB periodicity assumed by the UE during initial cell search is defined as 20 ms. After cell access, the SSB periodicity may be set to one of {5 ms, 10 ms, 20 ms, 40 ms, 80 ms, 160 ms} by a network (e.g., BS). A set of SSB bursts is constructed at a start portion of the SSB periodicity. The SSB burst set may be configured by a 5-ms time window (i.e., half-frame), and the SSB may be transmitted up to L times within the SSB burst set. L which is the maximum number of transmissions of the SSB may be given as follows according to a frequency band of a carrier. One slot includes up to two SSBs.

- For frequency range up to 3 GHz, L = 4
- For frequency range from 3GHz to 6 GHz, L = 8
- For frequency range from 6 GHz to 52.6 GHz, L = 64

A time location of SSB candidates within the SSB burst set may be defined depending on subcarrier spacing. The time location of the SSB candidates is indexed (SSB index) from 0 to L-1 based on time order within the SSB burst set (i.e., half-frame).

A plurality of SSBs may be transmitted within a frequency span of a carrier. Physical layer cell identifiers of these SSBs need not be unique, and other SSBs may have other physical layer cell identifiers.

The UE may acquire DL synchronization by detecting the SSB. The UE may identify a structure of the SSB burst set based on the detected SSB (time) index, and thus detect a symbol/slot/half-frame boundary. The number of the frame/half-frame to which the detected SSB belongs may be identified using system frame number (SFN) information and half-frame indication information.

Specifically, the UE may acquire a 10-bit SFN for a frame, to which PBCH belongs, from the PBCH. Next, the UE may acquire 1-bit half-frame indication information. For example, if the UE detects a PBCH with a half-frame indication bit set to 0, the UE may determine that the SSB, to which the PBCH belongs, belongs to a first half-frame in the frame, and if the UE detects a PBCH with a half-frame indication bit set to 1, the UE may determine that the SSB, to which the PBCH belongs, belongs to a second half-frame in the frame. Finally, the UE may acquire an SSB index of the SSB, to which the PBCH belongs, based on a DMRS sequence and a PBCH payload carried by the PBCH.

## System Information acquisition

System information (SI) is divided into a master information block (MIB) and a plurality of system information blocks (SIB). The SI other than the MIB may be referred to as remaining minimum system information (RMSI). The following may be referred to for details.

- The MIB includes information/parameters for monitoring PDCCH scheduling PDSCH carrying system information block1 (SIB1) and is transmitted by a BS via PBCH of SSB. For example, a UE may check whether a control resource set (CORESET) for a Type0-PDCCH common search space exists based on the MIB. The Type0-PDCCH common search space is a kind of PDCCH search space and is used to transmit a PDCCH for scheduling an SI message. If there is a Type0-PDCCH common search space, the UE may determine, based on information (e.g., pdcch-ConfigSIB1)) within the MIB, (i) a plurality of contiguous/consecutive resource blocks and one or more consecutive symbols constituting the CORESET, and (ii) a PDCCH occasion (e.g., time domain location for PDCCH reception). If there is no Type0-PDCCH common search space, pdcch-ConfigSIB1 provides information for a frequency location where SSB/SIB1 exists and a frequency range where the SSB/SIB1 does not exist.
- The SIB1 contains information related to availability and scheduling (e.g., transmission periodicity, SI-window size) of the remaining SIBs (hereinafter, referred to as SIBx, where x is an integer of 2 or more). For example, the SIB1 may inform whether the SIBx is periodically broadcasted or whether the SIBx is provided by a request of the UE according to an on-demand scheme. If the SIBx is provided by the on-demand scheme, the SIB1 may include information which the UE requires to perform an SI request. The SIB1 is transmitted via the PDSCH, the PDCCH for scheduling the SIB1 is transmitted through the Type0-PDCCH common search space, and the SIB1 is transmitted via the PDSCH indicated by the PDCCH.
- The SIBx is included in the SI message and is transmitted via the PDSCH. Each SI message is sent within a time window (i.e., SI-window) which periodically occurs.

## Orthogonal Frequency Division Multiplexing (OFDM) Numerology

A new RAT system uses an OFDM transmission scheme or a similar transmission scheme thereto. The new RAT system may follow different OFDM parameters from OFDM parameters of LTE. Alternatively, the new RAT system may follow numerology of existing LTE/LTE-A as it is but have a larger system bandwidth (e.g., 100 MHz). Alternatively, one cell may support a plurality of numerologies. In other words, UEs that operate with different numerologies may coexist in one cell.

## Radio Frame Structure

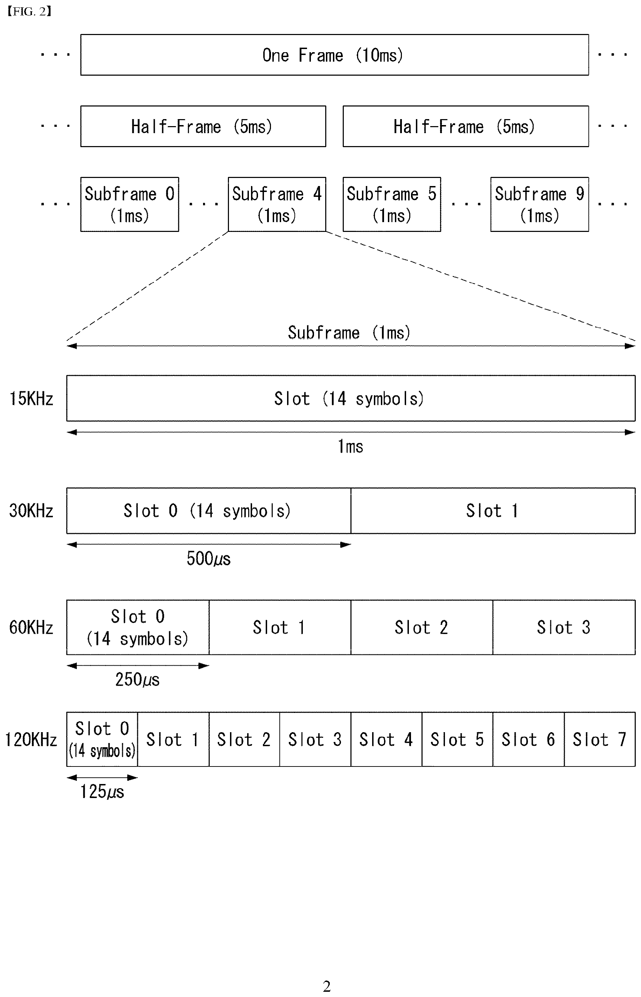

FIG. 2 illustrates an example of a radio frame structure used in a system applicable to the present disclosure.

In NR, uplink and downlink transmission consists of frames. A radio frame has a length of 10 ms and is defined as two 5 ms half-frames (HFs). The half-frame is defined as five 1 ms subframes (SFs). The subframe is split into one or more slots, and the number of slots in the subframe depends on a subcarrier spacing (SCS). Each slot includes 12 or 14 OFDM(A) symbols depending on a cyclic prefix (CP). When a normal CP is used, each slot includes 14 symbols. When an extended CP is used, each slot includes 12 symbols. The symbol may include an OFDM symbol (or CP-OFDM symbol) and an SC-FDMA symbol (or DFT-s-OFDM symbol).

Table 1 shows that when the normal CP is used, the number of symbols per slot, the number of slots per frame, and the number of slots per subframe vary depending on the SCS.

[Table 1]

| SCS (15*2^u) | $N^{slot}_{symb}$ | $N^{frame,u}_{slot}$ | $N^{subframe,u}_{slot}$ |
|---|---|---|---|
| 15 KHz (u=0) | 14 | 10 | 1 |
| 30 KHz (u=1) | 14 | 20 | 2 |
| 60 KHz (u=2) | 14 | 40 | 4 |
| 120 KHz (u=3) | 14 | 80 | 8 |
| 240 KHz (u=4) | 14 | 160 | 16 |

$N^{slot}_{symb}$ is the number of symbols in the slot. $N^{frame,u}_{slot}$ is the number of slots in the frame. $N^{subframe,u}_{slot}$ is the number of slots in the subframe.

Table 2 shows that when the extended CP is used, the number of symbols per slot, the number of slots per frame, and the number of slots per subframe vary depending on the SCS.

[Table 2]

| SCS (15*2^u) | $N^{slot}_{symb}$ | $N^{frame,u}_{slot}$ | $N^{subframe,u}_{slot}$ |
|---|---|---|---|
| 60KHz (u=2) | 12 | 40 | 4 |

The NR supports multiple numerologies (or subcarrier spacing (SCS)) for supporting various 5G services. For example, when the SCS is 15 kHz, a wide area in traditional cellular bands is supported and when the SCS is 30 kHz/60 kHz, dense-urban, lower latency, and wider carrier bandwidth are supported, and when the SCS is more than 60 kHz, a bandwidth larger than 24.25 GHz is supported in order to overcome phase noise.

An NR frequency band may be defined as two types of frequency ranges (FR1 and FR2). Values of the frequency ranges may be changed, and, for example, the two types of frequency ranges (FR1 and FR2) may be as shown in Table 3 below. For convenience of description, among frequency ranges used in an NR system, FR1 may denote "sub 6GHz range", and FR2 may denote "above 6GHz range" and may be referred to as millimeter wave (mmW).

[Table 3]

| Frequency Range Designation | Corresponding Frequency Range | Subcarrier Spacing |
|---|---|---|
| FR1 | 450 MHz - 6000 MHz | 15, 30, 60 kHz |
| FR2 | 24250 MHz - 52600 MHz | 60, 120, 240 kHz |

As described above, the values of the frequency ranges in the NR system may be changed. For example, FR1 may include a frequency band from 410 MHz to 7125 MHz, as shown in Table 4 below. That is, FR1 may include a frequency band of 6 GHz (or 5850, 5900, 5925 MHz, etc.) or higher. For example, the frequency band of 6 GHz (or 5850, 5900, 5925 MHz, etc.) or higher included in FR1 mat include an unlicensed band. The unlicensed band may be used for diverse purposes, for example, used for communication for vehicles (e.g., self-driving).

[Table 4]

| Frequency Range Designation | Corresponding Frequency Range | Subcarrier Spacing |
|---|---|---|
| FR1 | 410 MHz - 7125 MHz | 15, 30, 60 kHz |
| FR2 | 24250 MHz - 52600 MHz | 60, 120, 240 kHz |

In the NR system, OFDM(A) numerology (e.g., SCS, CP length, etc.) may be differently configured between a plurality of cells merged into one UE. Hence, an (absolute time) duration of a time resource (e.g., SF, slot or TTI) (for convenience, collectively referred to as a time unit (TU)) consisting of the same number of symbols may be configured differently between the merged cells.

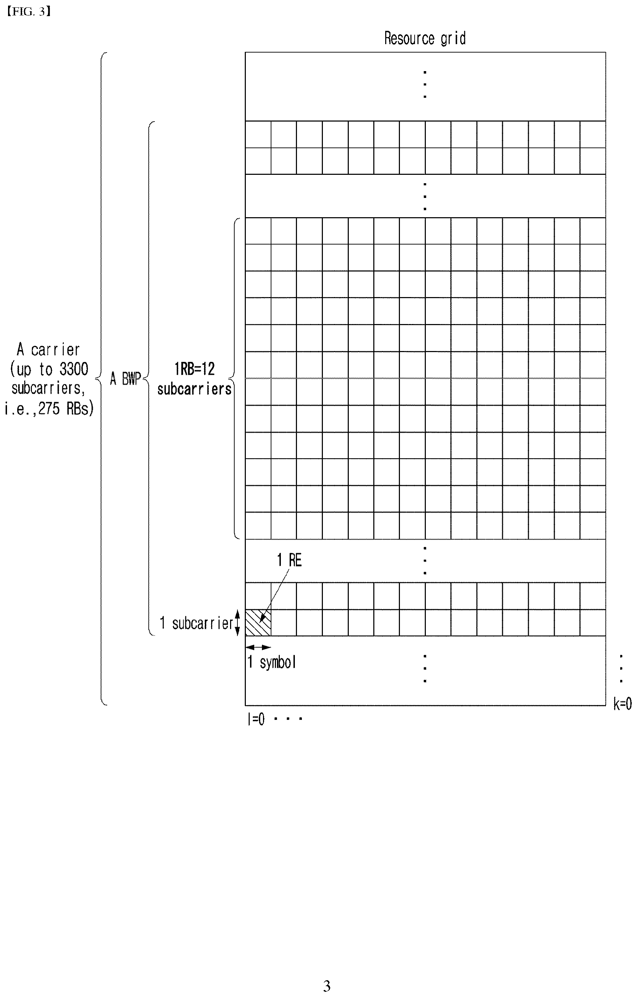

FIG. 3 illustrates an example of a slot structure used in a system applicable to the present disclosure.

A slot includes a plurality of symbols in a time domain. For example, one slot includes 7 symbols in a normal CP, while one slot includes 6 symbols in an extended CP. A carrier includes a plurality of subcarriers in a frequency domain. A resource block (RB) is defined as a plurality of (e.g., 12) consecutive subcarriers in the frequency domain. A bandwidth part (BWP) is defined as a plurality of consecutive (P)RBs in the frequency domain and may correspond to one numerology (e.g., SCS, CP length, etc.). The carrier may include up to N (e.g., 5) BWPs. The data communication may be performed through an activated BWP, and only one BWP may be activated in one UE. In a resource grid, each element is referred to as a resource element (RE), and one complex symbol may be mapped to each RE.

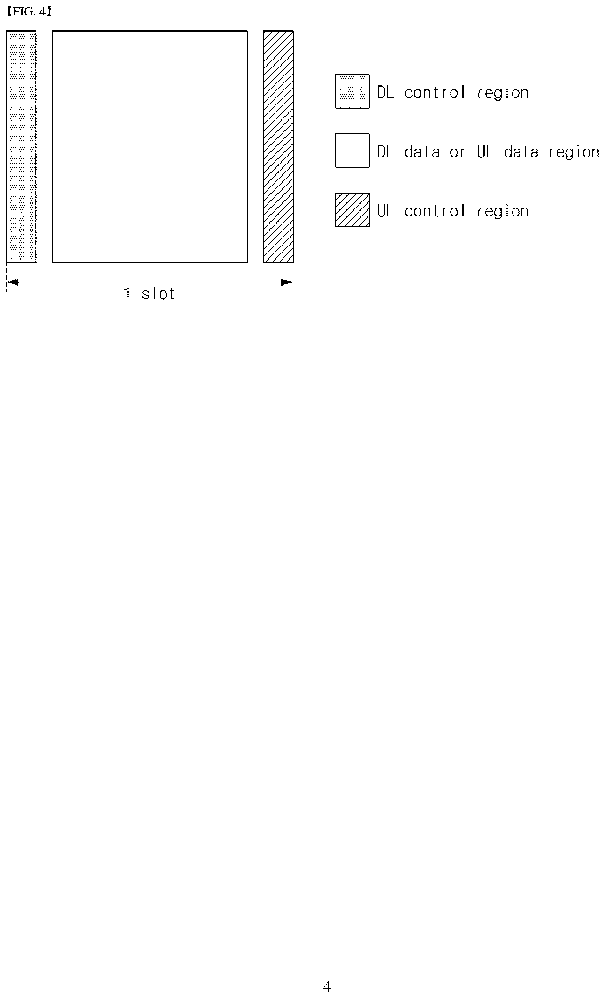

FIG. 4 illustrates an example of a slot structure of a radio frame used in a system applicable to the present disclosure.

Specifically, FIG. 4 illustrates a slot structure of a frame of the NR system as an exemplary system.

As illustrated in FIG. 4, a frame structure of NR is characterized by a self-contained structure in which all of DL control channel, DL or UL data, UL control channel, etc. can be included in one slot. In this instance, DL data scheduling information, UL data scheduling information, etc. may be transmitted on the DL control channel, and ACK/NACK information for DL data, CSI information (modulation and coding scheme information, MIMO transmission related information, etc.), scheduling request, etc. may be transmitted on the UL control channel. In FIG. 4, a time gap for DL-to-UL or UL-to-DL switching may exist between a control region and a data region. Further, a part of the DL control channel/DL data/UL data/UL control channel may not be configured within one slot. Alternatively, order of the channels constituting one slot may vary (e.g., DL control/DL data[UL control/UL data or UL control/UL data/DL control/DL data, etc.).

Technical terms used in the present disclosure

- UE: User Equipment
- SSB: Synchronization Signal Block
- MIB: Master Information Block
- RMSI: Remaining Minimum System Information
- FR1: Frequency domain with frequency range of 1.6 GHz or less (e.g., 450 MHz to 6,000 MHz)
- FR2: Millimeter wave (mmWave) domain with frequency range of 2.24 GHz or higher (e.g., 24,250 MHz to 52,600 MHz)
- BW: Bandwidth
- BWP: Bandwidth Part
- RNTI: Radio Network Temporary Identifier
- CRC: Cyclic Redundancy Check
- SIB: System Information Block
- SIB1: SIB1 for NR devices = RMSI (Remaining Minimum System Information). It broadcasts information, etc. necessary for cell access of an NR UE.
- CORESET (COntrol REsource SET): Time/frequency resource in which an NR UE tries candidate PDCCH decoding
- CORESET#0: CORESET for Type0-PDCCH CSS set for NR devices (configured in MIB)
- Type0-PDCCH CSS set: a search space set in which an NR UE monitors a set of PDCCH candidates for a DCI format with CRC scrambled by a SI-RNTI
- MO: PDCCH Monitoring Occasion for Type0-PDCCH CSS set
- SIB1-R: (additional) SIB1 for reduced capability NR devices. It may be limited when it is generated with a separate TB from SIB1 and is transmitted on a separate PDSCH.
- CORESET#0-R: CORESET#0 for reduced capability NR devices
- Type0-PDCCH-R CSS set: a search space set in which a redcap UE monitors a set of PDCCH candidates for a DCI format with CRC scrambled by a SI-RNTI
- MO-R: PDCCH Monitoring Occasion for Type0-PDCCH CSS set
- Cell defining SSB (CD-SSB): SSB including RMSI scheduling information among NR SSBs
- Non-cell defining SSB (non-CD-SSB): SSB that has been deployed on NR sync raster, but does not include RMSI scheduling information of a corresponding cell for measurement. But, the SSB may include information informing a location of cell defining SSB.
- SCS: Subcarrier Spacing
- SI-RNTI: System Information Radio-Network Temporary Identifier
- Camp on: "Camp on" is the UE state in which the UE stays on a cell and is ready to initiate a potential dedicated service or to receive an ongoing broadcast service.
- TB: Transport Block
- RSA (Redcap standalone): Cell supporting only redcap device or service
- SIB1(-R)-PDSCH: PDSCH transmitting SIB1(-R)
- SIB1(-R)-DCI: DCI scheduling SIB1(-R)-PDSCH. DCI format 1_0 with CRC scrambled by SI-RNTI.
- SIB1(-R)-PDCCH: PDCCH transmitting SIB1(-R)-DCI
- FDRA: Frequency Domain Resource Allocation
- TDRA: Time Domain Resource Allocation
- RA: Random Access
- MSGA: preamble and payload transmissions of the random access procedure for 2-step RA type.
- MSGB: response to MSGA in the 2-step random access procedure. MSGB may consist of response(s) for contention resolution, fallback indication(s), and backoff indication.
- RO-N: RACH Occasion (RO) for normal UE 4-step RACH and 2-step RACH (if configured)
- RO-N1, RO-N2: If separate RO is configured for normal UE 2-step RACH, it is divided into RO-N1 (4-step) and RO-N2 (2-step).
- RO-R: RACH Occasion (RO) separately configured from RO-N for redcap UE 4-step RACH and 2-step RACH (if configured)

- RO-R1, RO-R2: If separate RO is configured for redcap UE 2-step RACH, it is divided into RO-R1 (4-step) and RO-R2 (2-step).
- PG-R: MsgA-Preambles Group for redcap UEs
- RAR: Randoma Access Response
- RAR window: the time window to monitor RA response(s)
- FH: Frequency Hopping
- iBWP: initial BWP
- iBWP-DL(-UL): initial DL(UL) BWP
- iBWP-DL(-UL)-R: (separate) initial DL(UL) BWP for RedCap
- CS: Cyclic shift
- NB: Narrowband
- TO: Traffic Offloading
- mMTC; massive Machine Type Communications
- eMBB: enhanced Mobile Broadband Communication
- URLLC: Ultra-Reliable and Low Latency Communication
- RedCap: Reduced Capability
- eRedCap: enhanced RedCap
- FDD: Frequency Division Duplex
- HD-FDD: Half-Duplex-FDD
- DRX: Discontinuous Reception
- RRC: Radio Resource Control
- RRM: Radio Resource Management
- IWSN: Industrial Wireless Sensor Network
- LPWA: Low Power Wide Area
- RB: Resource Block
- CCE: Control Channel Element
- AL: Aggregation Level
- PRG: Physical Resource-block Group
- DFT-s-OFDM: DFT-spread OFDM
- PBCH: Physical Broadcast Channel
- A-PBCH: Additional PBCH
- BD: blind detection
- EPRE: Energy Per RE
- SNR: Signal-to-Noise Ratio
- TDM: Time Division Multiplexing
- DMRS: DeModulation Reference Signal
- TDD: Time Division Duplex
- PCI: Physical layer Cell ID

## Composition and Method of the present disclosure

In the present disclosure, '()' can be interpreted as both when excluding content in parentheses and when including content in parentheses.

In the present disclosure, '/' can be interpreted as when including all the contents separated by '/' (and), or when including only a part of the separated contents (or).

The 5G wireless communication system is characterized by effectively supporting use cases, such as mMTC, eMBB, and URLLC, compared to the previous generation wireless communication system (e.g., LTE, GSM). Due to these advantages, the 5G wireless communication system is expected to create new use cases and gradually replace the previous generation wireless communication system for various use cases. Features such as enhanced low latency, high reliability, massive connection, etc. of the 5G wireless communication system can be applied to use cases (hereinafter, NB use cases) that have been previously supported in narrowband (NB), as follows.

[Examples of narrowband based use cases (NB use cases)]

Railway mobile communication
Utility/infrastructure network

Mobile communication for public safety

These NB use cases have been previously supported at a bandwidth of about 3 MHz in a frequency band of less than 1 GHz using the previous generation wireless communication system. In the same manner, when the 5G wireless communication system intends to support the NB use cases, the NB use cases may be supported, for example, at the similar frequency bandwidth (about 3 MHz and below 5 MHz) in the same frequency band (below 1 GHz). However, since a minimum channel BW supported by the current 5G NR standard is 5 MHz, a channel bandwidth of less than 5 MHz shall first be supported.

[Example of 5G NR frequency band for NB service/use case support (TS38.101-1)]

NB services/use cases can be supported, for example, in the following NR operating frequency band defined in NR standard 3GPP TS (technical standard) 38.101-1. Table 5 shows "Table 5.2-1: NR operating bands in FR1" of 3GPP TS 38.101-1.

[Table 5]

| NR operating band | Uplink (UL) operating band BS receive/UE transmit $F_{UL\_low}$ - $F_{UL\_high}$ | Downlink (DL) operating band BS transmit/UE receive $F_{DL\_low}$ - $F_{DL\_high}$ | Duplex Mode |
|---|---|---|---|
| n8 | 880 MHz - 915 MHz | 925 MHz - 960 MHz | FDD |
| n26 | 814 MHz - 849 MHz | 859 MHz - 894 MHz | FDD |
| n28 | 703 MHz - 748 MHz | 758 MHz - 803 MHz | FDD |
| n100 | 874.4 MHz - 880 MHz | 919.4 MHz - 925 MHz | FDD |

[Example of definition of channel BW of less than 5 MHz for NB service/use case support]

Table 6 shows an example of the maximum number of configurable RBs ($N_{RB}$) for each channel BW. Specifically, Table 6 shows an example of defining 3 MHz channel BW and the maximum number of configurable RBs ($N_{RB}$) 15 for the 3 MHz channel BW in order to support the NB services/use cases based on 5G NR, and representing a resource utilization ratio (or RU). The RU can be defined as in Equation 1 below.

$$【Equation 1】$$

$$RU \ = \ (N_{RB} \text{ in MHz}) / (\text{channel BW in MHz})$$

Table 6 below shows a support example 1 for channel BW of less than 5 MHz.

[Table 6]

| Channel BW | 3 MHz | 5 MHz | 10 MHz | 15 MHz | 20 MHz | 25 MHz | 30 MHz | 40 MHz | 50 MHz |
|---|---|---|---|---|---|---|---|---|---|
| $N_{RB}$ | 15 | 25 | 52 | 79 | 106 | 133 | 160 | 216 | 270 |
| RU | 0.9 | 0.9 | 0.936 | 0.948 | 0.954 | 0.958 | 0.96 | 0.972 | 0.972 |

Alternatively, for newly defined 3 MHz channel BW, considering interference between contiguous channels and the resource utilization ratio, one of $N_{RB}$ values shown in Table 7 below may be defined and used. Alternatively, multiple values of $N_{RB}$ values shown in Table 7 below may be supported in the NR standard and supported by BS configuration.

Table 7 below shows a support example 2 for channel BW of less than 5 MHz.

[Table 7]

| SCS (kHz) | 3 MHz | | | | |
|---|---|---|---|---|---|
| | $N_{RB}$ | $N_{RB}$ | $N_{RB}$ | $N_{RB}$ | $N_{RB}$ |
| 15 | 12 | 13 | 14 | 15 | 16 |

(continued)

| SCS (kHz) | 3 MHz | | | | |
|---|---|---|---|---|---|
| | $N_{RB}$ | $N_{RB}$ | $N_{RB}$ | $N_{RB}$ | $N_{RB}$ |
| RU (%) | 0.72 | 0.78 | 0.84 | 0.9 | 0.96 |

In this instance, the channel BW/$N_{RB}$ may apply the same value for both DL and UL, or channel BW/$N_{RB}$ may be configured/supported separately/independently for DL and UL. The latter case may be a method of selecting when intending to apply conditions where additional DFT precoding is applicable only to the UL when determining the $N_{RB}$ values, while supporting maximum channel BW/$N_{RB}$ values in both DL and UL, for example, considering interference between contiguous channels and the resource utilization ratio.

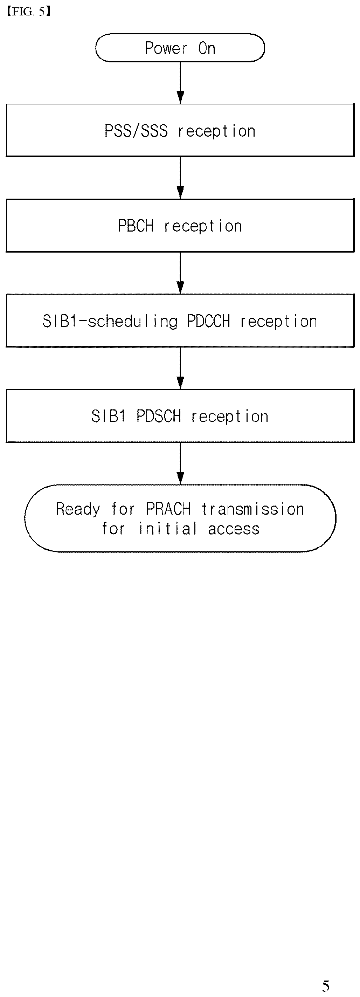

FIG. 5 illustrates an example of a process for a UE to receive DL signals/channels in an initial access procedure in a system applicable to the present disclosure.

Referring to FIG. 5, in an initial access procedure, a UE may receive DL signals/channels in order of (1) power-On, (2) PSS/SSS reception, (3) PBCH reception, (4) SIB1-scheduling PDCCH reception, (5) SIB1 PDSCH reception, and (6) ready for PRACH transmission for initial access.

The initial access procedure was described above in detail. The existing NR UE may receive CORESET#0 information through an MIB transmitted on a PBCH and receive initial DL signals/channels through CORESET#0 frequency band in an initial access procedure. However, when the NR UE operates in a narrowband, the existing method may be inefficient considering the channel BWs shown in Tables 6 and 7 and supportable CORESET#0 bandwidth in the NR standard.

The present disclosure proposes the following methods for supporting transmission/reception of DL broadcast signal/channel for initial access in a narrowband.

In the present disclosure, narrowband and NB can be interpreted/applied interchangeably. Further, channel BW, $N_{RB}$, allowed/supported transmission BW, (punctured/non-punctured) PBCH BW, and maximum transmission BW can be interpreted/applied interchangeably.

In the present disclosure, broadcast signaling includes system information including SIB1, MIB, PBCH payload generated in PHY layer in addition to the MIB, and a signaling method using PBCH scrambling sequence and PBCH DMRS sequence initialization information.

In the present disclosure, the broadcast signaling may include differently defining or interpreting the existing bit/field. For example, conventionally, if some of MIB, PBCH payload generated in PHY layer in addition to the MIB, and a signaling method using PBCH scrambling sequence and PBCH DMRS sequence initialization information, that have been used for the broadcast signaling, no longer need to be signaled, the broadcast signaling may include newly defining a corresponding bit/field and signaling it. For example, in a narrowband frequency band supporting only 15 kHz SCS, the broadcast signaling may include using subCarrierSpacingCommon in MIB (1 bit, { 15 kHz, 30 kHz}) as other 1-bit broadcast signaling purposes. Further, if PBCH/SIB1/SIB1-scheduling DCI transmission for a new UE is possible using a frequency band, a dedicated spectrum, a dedicated sync raster, etc. without an influence on a legacy UE, the broadcast signaling may include a method of performing signaling by newly defining or differently interpreting bit/field that has been used for broadcast signaling purpose for the existing legacy UE.

## Method of transmitting and receiving PBCH

In order to support NR DL broadcast signal reception in a narrowband with 5 MHz bandwidth (bandwidth less than 5 MHz), a subset of PBCH transmission RBs may be transmitted.

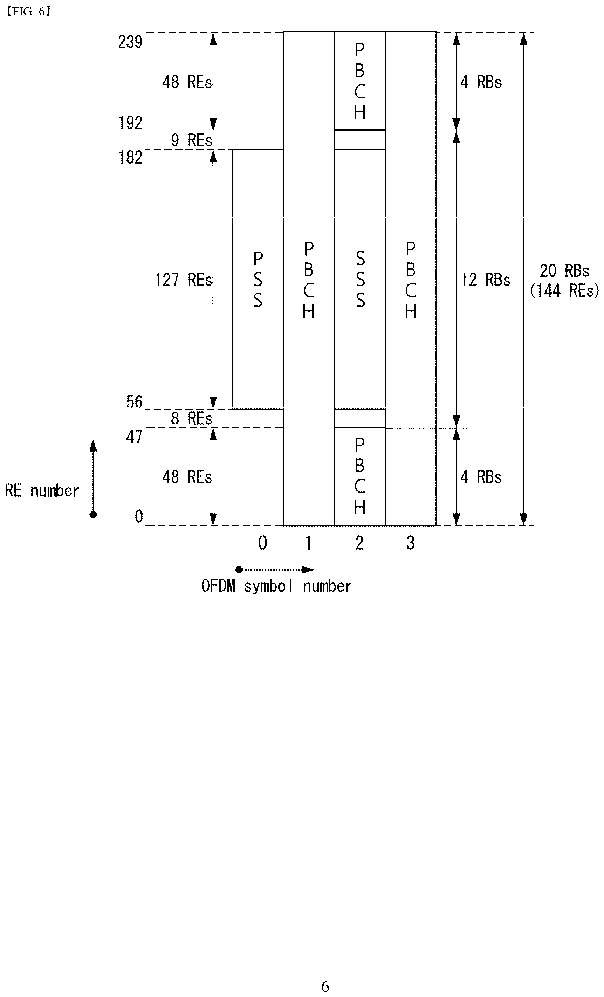

FIG. 6 illustrates an example of time/frequency structure of a synchronization signal block (SSB) in a system applicable to the present disclosure.

For example, a base station may need to exclude or puncture at least five PBCH transmission RBs from PBCH consisting of 20 PRBs and transmit remaining RBs, in order to support PBCH transmission/reception in 3 MHz channel BW stipulated as $N_{RB}$ = 15 PRBs. That is, the base station may transmit a subset of up to 15 PBCH transmission RBs among a total of 20 PBCH transmission RBs. Further, all the PSS/SSS transmission RBs can be transmitted for the same level of synchronization and measurement performance as the existing NR UE. In this case, the minimum PBCH transmission RBs may be 12 RBs including PSS/SSS.

In the present disclosure, the "punctured" PBCH or the PBCH transmission RB subset means an actual transmitted PBCH after the puncturing application when a subset of PBCH transmission RBs is punctured and transmitted. Therefore, the punctured PBCH and the PBCH transmission RB subset can be interpreted/applied interchangeably.

In 3-MHz channel BW stipulated as $N_{RB}$ = 15 PRBs as in the above example, the BS/UE can configure the PBCH transmission RB subset using 12 PRBs to 15 PRBs. Methods of configuring a PBCH transmission RB subset respectively using 12 PRBs and 15 PRBs are described below.

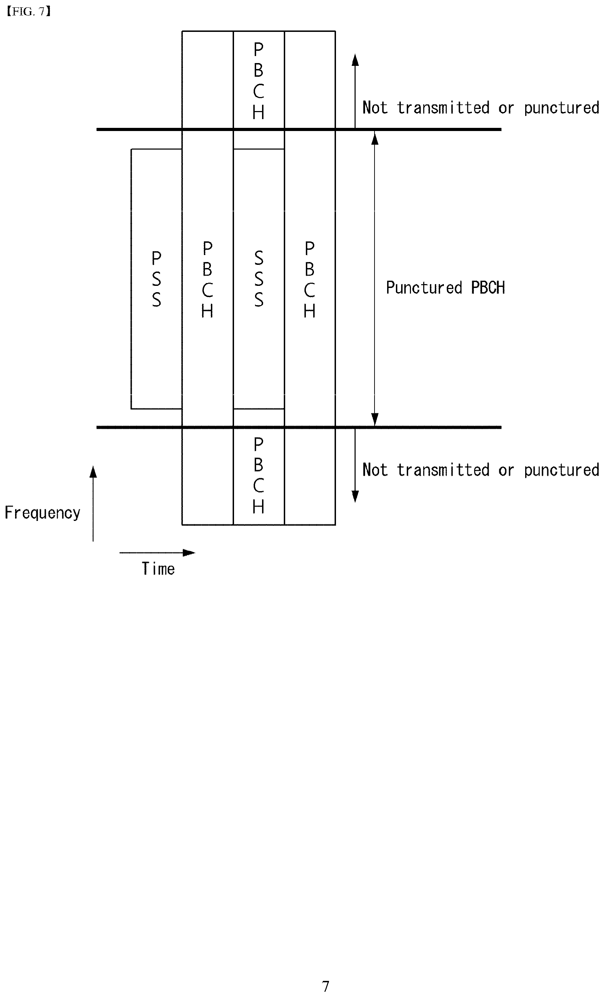

FIG. 7 illustrates an example of a method of configuring a PBCH transmission RB subset using 12 PRBs including PSS/SSS in a system applicable to the present disclosure.

[Method #P1: Configuring a PBCH transmission RB subset using 12 PRBs including PSS/SSS]

The Method #P1 is a case in which a PBCH transmission RB subset is configured using only 12 PRBs including PSS/SSS. That is, a PBCH transmission RB subset is configured using a minimum RB subset including all the PSS/SSS. The Method #P1 may be efficient when it intends to apply to all of various narrowband channel BWs by defining one punctured PBCH or the PBCH transmission RB subset. FIG. 7 is an example of the Method #P1.

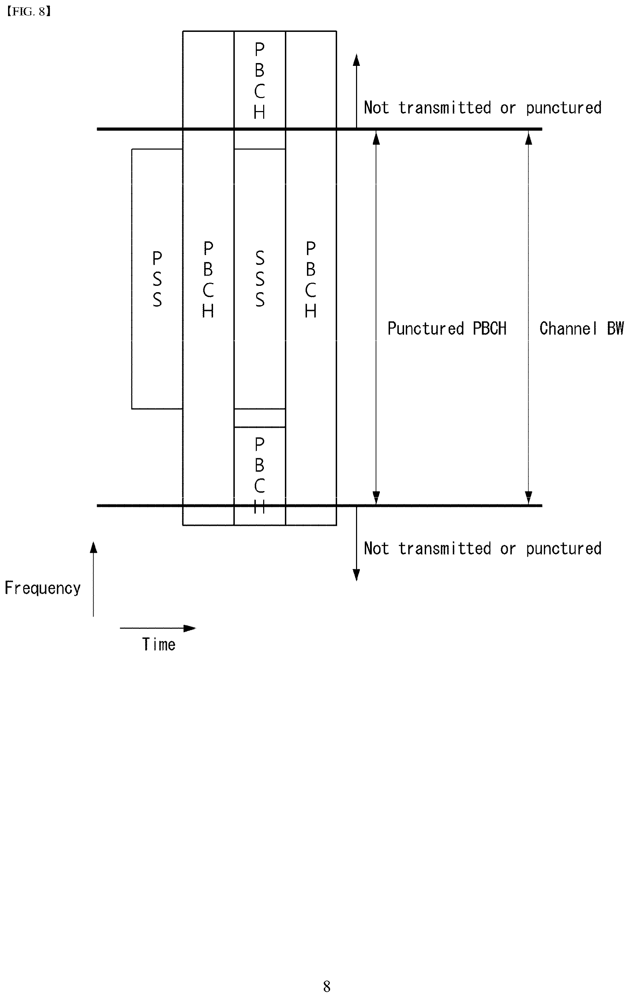

FIG. 8 illustrates an example of a method of configuring a PBCH transmission RB subset using 15 PRBs including PSS/SSS and determining it using center 12 PRBs (for PSS/SSS) and lower 3 PRBs in a system applicable to the present disclosure.

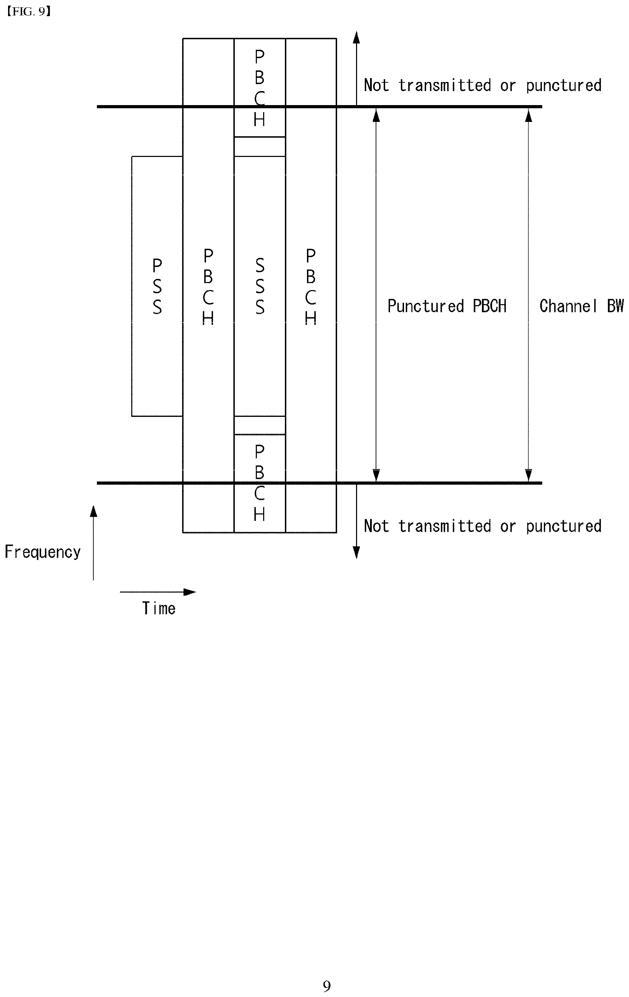

FIG. 9 illustrates an example of a method of configuring a PBCH transmission RB subset using 15 PRBs including PSS/SSS and determining it using center 12 PRBs (for PSS/SSS) and lower 2 PRBs + higher 1 PRB in a system applicable to the present disclosure.

[Method #P2: Configuring a PBCH transmission RB subset using 15 PRBs including PSS/SSS]

The Method #P2 is a case in which a PBCH transmission RB subset is configured using 15 PRBs including PSS/SSS, and can be configured in detail as follows.

- Method #P2-1: Determining using Center 12 PRBs (for PSS/SSS) and lower 3 PRBs
- Method #P2-2: Determining using Center 12 PRBs (for PSS/SSS) and higher 3 PRBs
- Method #P2-3: Determining using Center 12 PRBs (for PSS/SSS) and lower 2 PRBs + higher 1 PRB
- Method #P2-4: Determining using Center 12 PRBs (for PSS/SSS) and higher 2 PRBs + lower 1 PRB

Due to characteristics of PBCH RE mapping, preferentially transmitting lower RBs of PBCH transmission RBs may be slightly advantageous in terms of performance. Therefore, if other conditions are the same, the Method #P2-1 rather than the Method #P2-2 and the Method #P2-3 rather than the Method #P2-4 may be advantageous in terms of PBCH reception performance. The Methods #P2-1 and P2-2 may be affected in terms of sync performance and measurement performance in a situation, in which there is interference from contiguous channels/frequency bands, because the PSS/SSS is exposed to a band edge. If the influence of the interference is expected, the Method #P2-3 or the Method #2-4 may be considered. In the Method #P2-3 or the Method #2-4, the PSS/SSS is arranged further inside the channel BW, and thus this method may be to protect the PSS/SSS from the interference from the contiguous channels/frequency bands. FIG. 8 is an example of the Method #P2-1. FIG. 9 is an example of the Method #P2-3.

In the methods #P2-3 and #P2-4, if a maximum transmission BW defined in the narrowband is $N_{RB}$, the PBCH transmission RB subset may be determined by the following Equations.

- Method #P2-3: Center 12 PRB, lower ceil[($N_{RB}$ - 12)/2] PRB, upper floor[($N_{RB}$ -12)/2] PRB
- Method #P2-4: Center 12 PRB, lower floor[($N_{RB}$ - 12)/2] PRB, upper ceil[($N_{RB}$ -12)/2] PRB.

The methods of determining the PBCH transmission RB subset may be all applied in a fixed manner in all the narrowband frequency bands, or may be predefined in spec (in table form) per narrowband frequency band, or may be distinguished through a dedicated sync raster, or may be determined by the base station and configured/displayed to the UE by broadcast signaling. Alternatively, combinations of the methods may be indicated.

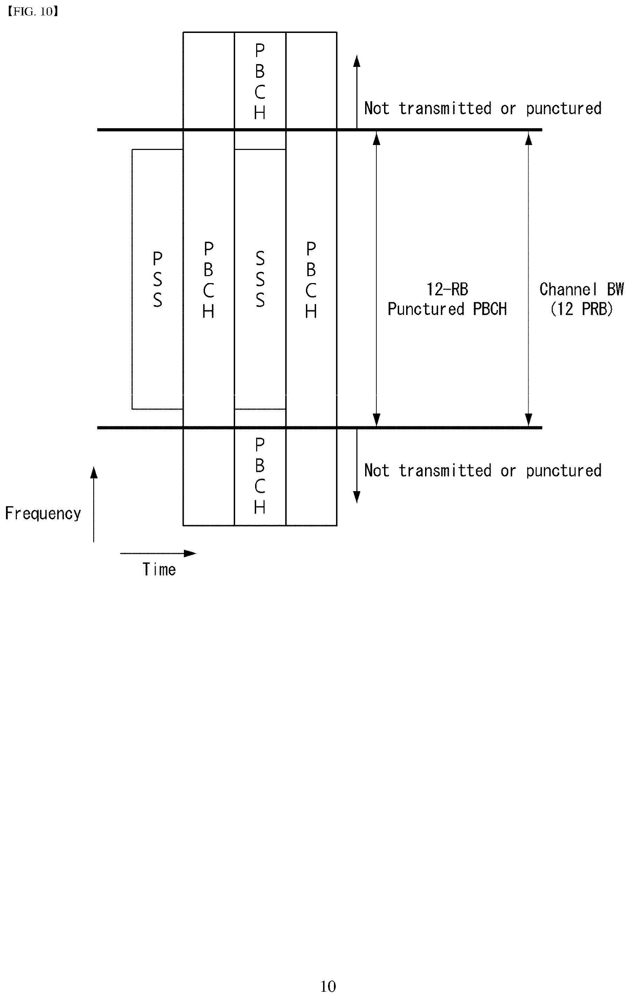

FIG. 10 illustrates an example of a method of defining a punctured PBCH including 12 PRBs and then applying 12-RB PBCH to a narrowband, in which a channel BW is 12 PRBs, in a system applicable to the present disclosure.

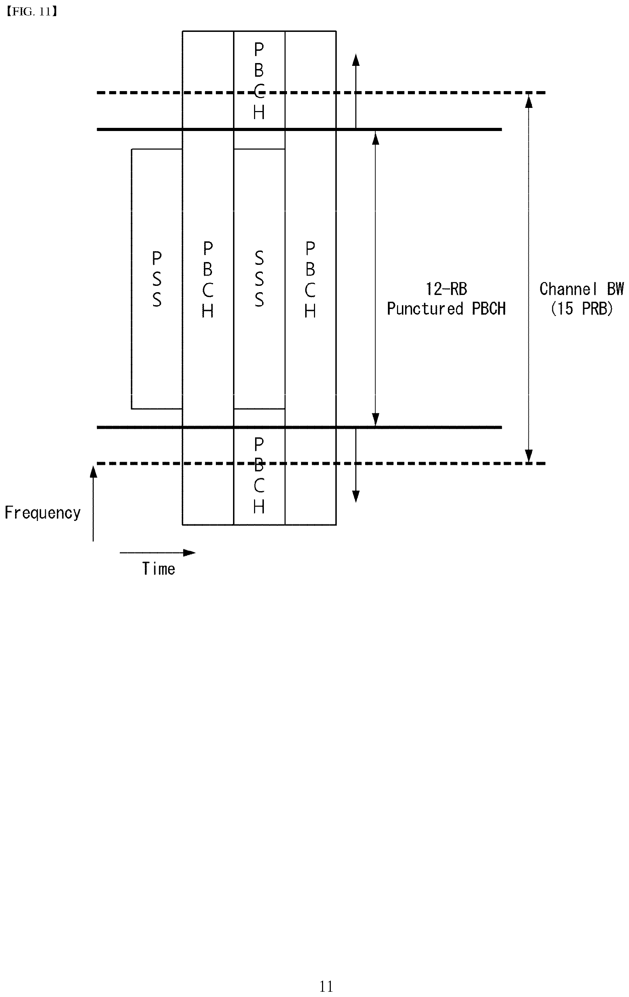

FIG. 11 illustrates an example of a method of defining a punctured PBCH including 12 PRBs and then applying 12-RB PBCH to a narrowband, in which a channel BW is 15 PRBs, in a system applicable to the present disclosure.

[Method #1] Method of applying the same punctured PBCH to all narrowband frequency bands

The Method #1 is a method of applying a punctured PBCH determined by a method, such as the Method #P1 and the Method #P2, to all narrowband frequency bands. For example, the Method #P1 is a method of defining a punctured PBCH consisting of 12 PRBs (briefly, 12-RB PBCH) and then equally applying the 12-RB PBCH to both a narrowband in which a channel BW is 12 PRBs and a narrowband in which the channel BW is 15 PRBs. Since a BS/UE needs to support only one punctured PBCH, there may be an advantage in terms of complexity. However, the Method #1 may have the disadvantage that PBCH performance is somewhat reduced compared to when supporting a PBCH consisting of PRBs (e.g., 15 PRBs) more than 12 PRBs. FIG. 10 illustrates an example of applying the 12-RB PBCH to the narrowband in which the channel BW is 12 PRBs. FIG. 11 illustrates an example of applying the 12-RB PBCH to the narrowband in which the channel BW is 15 PRBs.

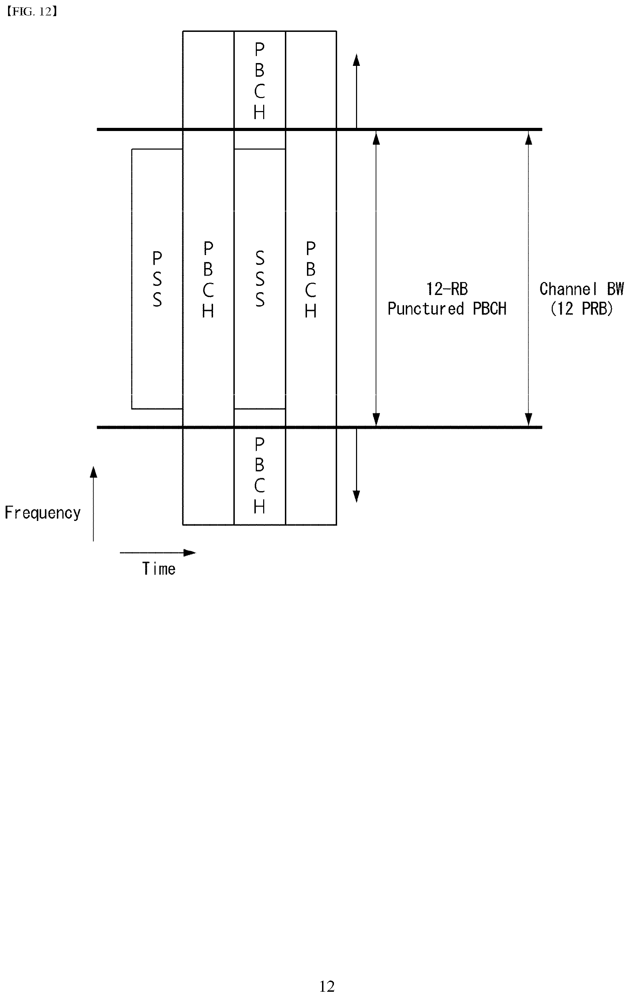

FIG. 12 illustrates an example of a method of applying 12-RB PBCH when a narrowband channel BW is less than 15 PRBs in a system applicable to the present disclosure.

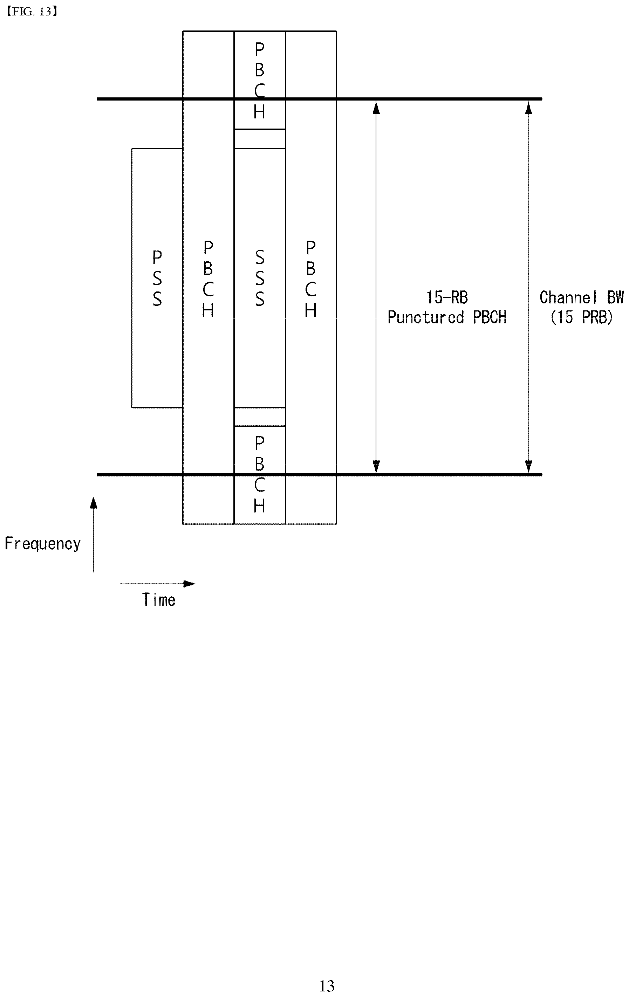

FIG. 13 illustrates an example of a method of applying 15-RB PBCH when a narrowband channel BW is less than 15 PRBs in a system applicable to the present disclosure.

[Method #2] Method of defining multiple punctured PBCHs and applying the punctured PBCHs per narrowband (or per carrier BW)

The Method #2 is a method of defining multiple punctured PBCHs by a method, such as the Method #P1 and the Method #P2, and applying the punctured PBCHs per narrowband or per carrier BW. For example, 12-RB PBCH and 15-RB PBCH may be defined based on the Method #P1 and the Method #P2, respectively. Then, if a narrowband channel BW is less than 15 PRBs, the 12-RB PBCH may be applied, and if the narrowband channel BW is greater than or equal to 15 PRBs, the 15-RB PBCH may be applied. Because the Method #2 needs to support multiple punctured PBCHs compared to the Method #1, the Method #2 may have the disadvantage of increase in the BS/UE complexity, but may have the advantage in terms of PBCH performance. FIG. 12 illustrates an example of applying the 12-RB PBCH and the 15-RB PBCH to the narrowband in which the channel BW is 12 PRBs. FIG. 13 illustrates an example of applying the 12-RB PBCH and the 15-RB PBCH to the narrowband in which the channel BW is 15 PRBs.

[Method #A: Method of supporting a punctured PBCH by network configuration]

In order to flexibly support the Method #1 and the Method #2 by the BS selection, the Method #A does not fix a punctured PBCH applied based on a narrowband frequency band or a carrier BW, and may define a so-called "default" punctured PBCH that the UE basically assumes when receiving SSB in a narrowband and allow punctured PBCH information applied by the BS in the actual corresponding narrowband frequency band or carrier BW to be indicated/displayed to the UE via broadcast signaling. For example, if a channel BW is 15 PRBs, 12-RB PBCH may be defined as the default punctured PBCH, and either 12-RB PBCH or 15-RB PBCH may be indicated via the broadcast signaling.

For the above purpose, information indicated/displayed by the base station via the broadcast signaling may be information related to the punctured PBCH transmitted in the corresponding narrowband frequency band or carrier BW. In this instance, the network may predefine, in the standard, configurable punctured PBCH(s) or punctured PBCH(s) supported in the standard and indicate/display one of the predefined punctured PBCH(s) via the broadcast signaling. Alternatively, the punctured PBCH information transmitted for the above purpose by the broadcast signaling may be information indicating/displaying additional PBCH transmission RE/RB(s) transmitted in addition to the default punctured PBCH that the UE assumes before the broadcast signaling. For example, if the default punctured PBCH is 12-RB PBCH and the actually transmitted punctured PBCH is 15-RB PBCH, an additional punctured PBCH transmission RB may be indicated as a value of 3 via the broadcast signaling.

Further, broadcast signaling information may include information on a location to which the additional punctured PBCH transmission RB(s) is transmitted. In this case, in the above example, broadcast signaling information may include information about whether the punctured PBCH is transmitted adjacent to a smallest RB index or transmitted adjacent to a largest RB index, in addition to the additional punctured PBCH transmission RB value of 3.

In the Method #A, the UE may assume the default punctured PBCH and receive the PBCH in all the narrowband frequency band(s) or the narrowband frequency band(s) predefined in the standard. Afterwards, the UE may acquire the additional or actual transmitted punctured PBCH information via the broadcast signaling, and then the UE may receive the punctured PBCH based on the broadcast signaling information when receiving the punctured PBCH.

Information such as CORESET#0 BW and initial DL BWP may be transmitted through the method of indicating/displaying the punctured PBCH via the broadcast signaling in the Method #A. Further, the CORESET#0 BW, the initial DL BWP, etc. may be determined by the punctured PBCH indicated/displayed via the broadcast signaling in the Method #A. For example, the punctured PBCH indicated/displayed in the Method #A as it is may be applied to the CORESET#0 BW and/or the initial DL BWP.

A new UE supporting a narrowband operation may be required to mandatorily support all punctured PBCH(s) defined/introduced for narrowband BS/UE operation. For example, if both the 12-RB PBCH and the 15-RB PBCH are supported, the new UE supporting the narrowband operation may be required to mandatorily support both the 12-RB PBCH and the 15-RB PBCH. Alternatively, the new UE supporting the narrowband operation may be allowed to selectively support the punctured PBCH(s) defined/introduced for the narrowband BS/UE operation. For example, in the above example, it may be allowed to mandatorily support the default punctured PBCH and selectively support the remaining punctured PBCH(s) additionally supported. The requirements for the UE may be defined per narrowband frequency band.

## Method of transmitting and receiving PDCCH

In order to receive SIB1-PDCCH in a narrowband, a UE may receive CORESET#0 and Type0-PDCCH CSS set information through MIB transmitted on PBCH. Since CORESET#0 bandwidth supported in the current NR standard is 24 PRBs (4.32 MHz) based on 15 kHz SCS, it may exceed narrowband channel BWs shown in Tables 6 and 7. In this instance, a base station may RE-map PDCCH transmission REs to CORESET #0 and then transmit only the REs falling within the channel BW. That is, the base station may puncture the PDCCH transmission REs exceeding the channel BW and transmit only the REs falling within the channel BW.

When the PDCCH transmission RE cannot be transmitted to the entire CORESET#0 BW for narrowband transmission/reception, the actual transmitted/received PDCCH REs may be determined in units of RE in the frequency domain or may be determined in units of PRB, in units of REG, in units of CCE, etc. When the PDCCH REs are determined in units of CCE, the actual PDCCH transmission/reception RE may be determined in units of 2 PRB in the case of 3-symbol CORESET#0. Alternatively, in the case of 2-symbol CORESET#0, the actual PDCCH transmission/reception RE may be determined in units of 3 PRB.

The UE may assume the above BS operation (i.e., the puncturing operation) and receive the PDCCH transmission REs within the channel BW. That is, the BS/UE may assume that all the PDCCH transmission REs RE-mapped to the CORESET#0 bandwidth are not transmitted/received based on the NR standard, and only the PDCCH transmission REs falling within the channel BW among the PDCCH transmission REs are actually transmitted/received, and may transmit/receive them.

Alternatively, the UE may assume the above BS operation (i.e., the puncturing operation) and receive the PDCCH transmission REs within a PBCH BW. That is, the BS/UE may assume that all the PDCCH transmission REs RE-mapped to the CORESET#0 bandwidth are not transmitted/received based on the NR standard, and only the PDCCH transmission REs falling within the PBCH BW among the PDCCH transmission REs are actually transmitted/received, and may transmit/receive them. In this instance, the PBCH BW that the UE expects the PDCCH transmission/reception may be the PBCH BW "used for actual PBCH transmission." That is, if some of PBCH transmission REs are punctured and transmitted, the UE may assume the PBCH BW "used for actual PBCH transmission after puncturing" or the "punctured" PBCH BW in the same meaning, as an initial DL BWP.

Further, in this case, when the CORESET#0 BW exceeds the channel BW, the UE may assume the PBCH BW as the initial DL BWP in the initial access procedure. In this instance, the PBCH BW that the UE assumes as the initial DL BWP may be the PBCH BW "used for actual PBCH transmission." That is, if some of the PBCH transmission REs are punctured and transmitted, the UE may assume the PBCH BW "used for actual PBCH transmission after puncturing" or the "punctured" PBCH BW in the same meaning the initial DL BWP. A reason for newly defining the initial DL BWP in narrowband in this way may be to remove factors that may cause UE complexity issues, such as the puncturing within the initial DL BWP and the partial reception, or adversely affect the reception coverage.

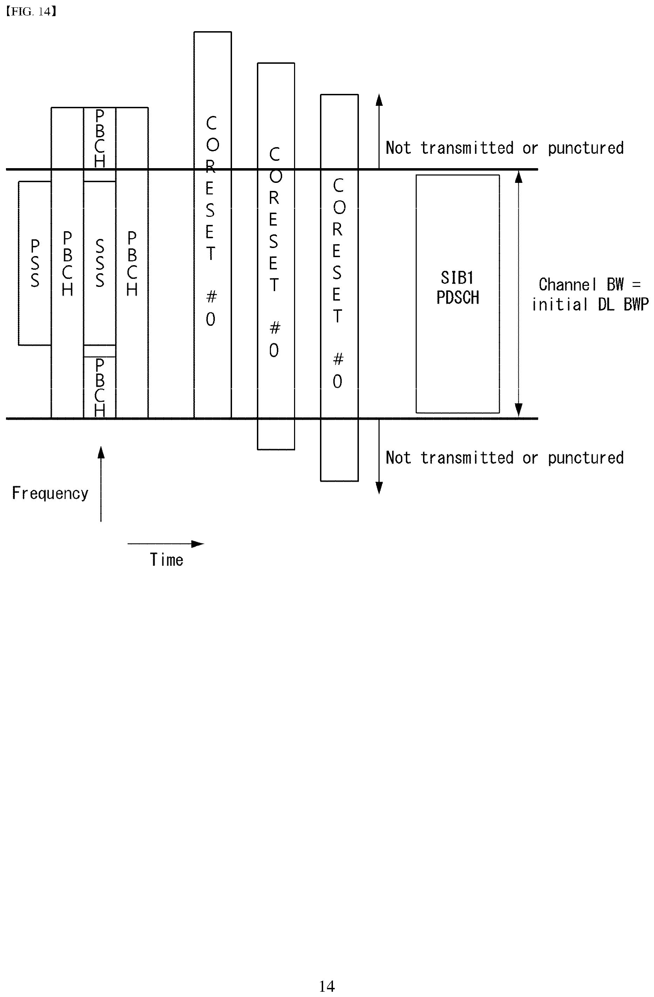

FIG. 14 illustrates an example of PDCCH transmission/reception frequency domain in a system applicable to the present disclosure.

Specifically, FIG. 14 illustrates, in narrowband in which $N_{RB}$ = 16 PRBs and CORESET#0 BW = 24 PRBs, a frequency domain, that the UE expects the PDCCH reception among the CORESET#0 BW, and an initial DL BWP when the Method #P1-1 is applied to determine a subset of the PBCH transmission REs and transmit the PBCH. In addition, FIG. 14 illustrates three CORESETs #0 with a size of 24 PRBs among CORESETs #0 that a base station can configure/display based on the current NR standard 3GPP TS 38.213 Table 13-1. As illustrated in FIG. 14, the three CORESETs #0 have different RB offset values (following the definition of 3GPP TS 38.213 Table 13-1), but they are all expected to transmit/receive similar amount of PDCCH transmission REs at a maximum transmission BW or a PBCH BW. Therefore, there may not be much difference in performance between the three CORESETs #0, and they can be all supported.

According to 3GPP TS 38.213 standard, relative locations of SSB and CORESET#0 are determined as shown in Table 8 below.

[Table 8]

| |
|---|
| For operation with shared spectrum channel access in FR2-2 and for operation without shared spectrum channel access, a UE assumes that the offset in Tables 13-1 through 13-10A is defined with respect to the SCS of the CORESET for Type0-PDCCH CSS set from the smallest RB index of the CORESET for Type0-PDCCH CSS set to the smallest RB index of the common RB overlapping with the first RB of the corresponding SS/PBCH block. The SCS of the CORESET for Type0-PDCCH CSS set is provided by *subCarrierSpacingCommon* for FR1 and FR2-1 and same as the SCS of the corresponding SS/PBCH block for FR2-2. In Tables 13-7, 13-8, and 13-10, $k_{SSB}$ is defined in [4, 3GPP TS 38.211]. |

[Method #A]

Even if PBCH and PDCCH are transmitted in the narrowband using the methods proposed in the present disclosure, a relative location relation between SSB and CORESET#0 and a signaling method for this may follow the existing standard. That is, "the smallest RB index of the CORESET for Type0-PDCCH CSS set", "the first RB of the corresponding SS/PBCH block", etc. described in the standard above may be based on the entire PBCH BW (before puncturing) and the entire CORESET#0 BW (before puncturing) even if actual transmission/reception is not performed due to subset transmission, puncturing, etc. for narrowband transmission. This method is referred to as Method #A.

[Method #B]

Alternatively, "the first RB of the corresponding SS/PBCH block" described in the standard above may be indicated based on actual transmitted/received PBCH transmission RBs (after determining puncturing or subset) when subset transmission, puncturing, etc. for narrowband transmission is performed. That is, this may be defined based on punctured PBCH. In this case, a new RB offset value may need to be defined. For example, for 12-RB PBCH, "the first RB of the corresponding SS/PBCH block" may mean "the first RB of the corresponding "(actually) transmitted" SS/PBCH block", "the first RB of the corresponding "non-punctured" SS/PBCH block", or "the subcarrier number 48 of the corresponding SS/PBCH block", etc.

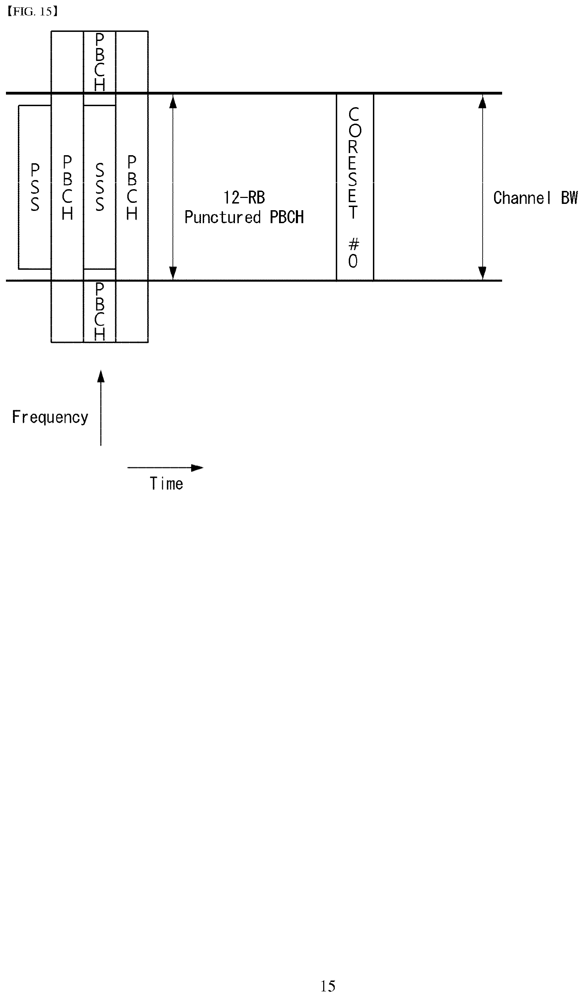

FIG. 15 illustrates an example of a method of applying CORESET #0 with CORESET #0 size = 12 PRBs when supporting 12-RB PBCH in a narrowband, in which a carrier BW is 12 PRBs, in a system applicable to the present disclosure.

For narrowband transmission, new CORESET#0 configuration may be added without reusing the existing NR standard 3GPP TS 38.213 Table 13-1. For example, a bandwidth of CORESET#0 added/introduced for narrowband transmission may be less than or equal to the channel BW, or may be less than the conventional CORESET#0 bandwidth even if the bandwidth of CORESET#0 is greater than the channel BW. For example, the following CORESET#0 configurations may be added.

(1)

$$CORESET\#0\ size = 12\ PRBs$$

(1-1) In this case, 12 REGs per OFDM symbols * 2 OFDM symbols = 24 REGs = 4 CCE AL can be supported using 2 OFDM symbols.

(1-2) Alternatively, 12 REGs per OFDM symbols * 3 OFDM symbols = 36 REGs = 6 CCE AL can be supported using 3 OFDM symbols.

(2)

$$CORESET\#0\ size = 14\ PRBs$$

(2-1) In this case, 14 REGs per OFDM symbols * 3 OFDM symbols = 42 REGs = 7 CCE AL can be supported using 3 OFDM symbols.

(3)

$$CORESET\#0\ size = 15\ PRBs$$

(3-1) In this case, 15 REGs per OFDM symbols * 3 OFDM symbols = 45 REGs = 7.5 CCE AL can be supported using 3 OFDM symbols.

(4)

$$CORESET\#0\ size = 16\ PRBs$$

(4-1) In this case, 16 REGs per OFDM symbols * 3 OFDM symbols = 48 REGs = 8 CCE AL can be supported using 3 OFDM symbols.

For example, if 12-RB PBCH is supported in a narrowband in which a carrier BW is 12 PRBs, as illustrated in FIG. 15, CORESET#0 with CORESET#0 size = 12 PRBs may be applied.

In this instance, RB offset value may be 0. That is, CRB smallest RB index overlapping with a smallest RB index of a punctured SSB may be aligned with CORESET#0 smallest RB index.

Alternatively, in order to prepare for the case where a punctured PBCH occupies the entire maximum transmission BW or to transmit CORESET#0 within the maximum transmission BW and/or the punctured PBCH BW without puncturing, the RB offset value "0" may be defined as a value that allows CRB "highest" RB index overlapping with the smallest RB index of the punctured SSB to be aligned with the CORESET#0 smallest RB index.

To support the example of FIG. 15 through the Method #A, the offset value may support a negative (-) value. For example, in the example of FIG. 15, the offset value of "-4" may allow CRB smallest RB index overlapping with the smallest RB index of the punctured SSB to be aligned with the CORESET#0 smallest RB index.

[Method #C]

Alternatively, it may be defined based on a smallest RB index among RBs (or CRBs) defined within the maximum transmission BW or available for DL reception, not based on the non-punctured PBCH (Method #A) or the punctured PBCH (Method #B). In this instance, the offset value "0" may be the value that allows the smallest RB index among the RBs (or CRBs) defined within the maximum transmission BW or available for DL reception to be aligned with the CORESET#0 smallest RB index.

Parameters for supporting the methods #A/B/C may be indicated/displayed by broadcast signaling. The parameters may include the applied method among the methods, and all or some of parameters such as offset.

In the methods, CORESET#0 highest RB index may be determined in a way, such as CRB biggest RB index not exceeding the maximum transmission BW or CRB biggest RB index not exceeding the punctured PBCH BW, without separate signaling. In this instance, the CORESET#0 highest RB index may be determined in units of RB/REG/REG bundle/CCE. If it is configured in units of REG bundle/CCE, the total number of CORESET#0 RBs may be limited to a multiple of the number of RBs constituting the REG bundle/CCE.

Alternatively, the CORESET#0 highest RB index may be configured via broadcast signaling. For example, the base station may indicate/display one value of supportable CORESET#0 BW values predefined in the standard to the UE via the broadcast signaling. The CORESET#0 BW supported in the narrowband may be a BWP size that is not supported by a legacy UE, and a new UE supporting a narrowband operation may be mandated to support CORESET#0 BW size supported in the narrowband.

[Method of determining PDCCH CCE index for PDCCH reception]

As mentioned above, a narrowband channel bandwidth (BW) may be less than a minimum bandwidth of the existing CORESET#0 designed considering a general bandwidth. In such a case, CORESET#0 BW may exceed the narrowband channel BW. For example, since CORESET#0 BW supported in the current NR standard is 24 PRBs (4.32 MHz) based on 15 kHz SCS, it may exceed narrowband channel BWs shown in Tables 6 and 7. The following two methods have been proposed to support this scenario.

[Method #1] New CORESET#0 use method

 (1) Method of defining and using new CORESET#0 with small bandwidth included in a narrowband channel BW and transmitting PDCCH through the newly defined CORESET#0
 (2) [Method #1 Example #1] Method of newly defining and supporting CORESET#0 with bandwidth of 12 PRBs less than the existing minimum bandwidth of 24 PRBs so as to support 3 MHz channel bandwidth

[Method #2] Existing CORESET#0 reuse method

 (1) Method of transmitting PDCCH by excluding (or puncturing/truncating) a PDCCH portion, that exceeds a narrowband channel BW and is RE-mapped, while reusing the existing CORESET#0
 (2) That is, a base station performs PDCCH RE mapping on the whole of the existing CORESET#0 bandwidth in the existing method stipulated in 3GPP TS 38.213, and then can transmit only PDCCH transmission REs/RBs/REGs/-REG bundles/CCEs included in the narrowband channel BW. In this instance, "include" may mean including part," or "including the whole."
 (3) [Method #2 Example # 1] Method of reusing 24-PRB CORESET#0 defined in 3GPP TS 38.213 Table 13-1 so as to support 3 MHz channel bandwidth. In this case, the PDCCH transmission REs/RBs/REGs/REG bundles/CCEs that exceed 3 MHz bandwidth (e.g., 15 PRBs based on 15 kHz SCS) and are RE-mapped may not be transmitted through the puncturing/truncation, or may not expect/require the UE reception.

The PDCCH CCE indexes for PDCCH reception can be obtained using the hashing function stipulated in 3GPP TS 38.213, as below.

[Table 9]

For a search space set *s* associated with CORESET *p*, the CCE indexes for aggregation level *L* corresponding to PDCCH candidate $m_{s,n_{CI}}^{(L)}$ of the search space set in slot $n_{s,f}^{\mu}$ for an active DL BWP of a serving cell corresponding to carrier indicator field value $n_{CI}$ are given by

$$L \cdot \left\{ \left( Y_{p,n_{s,f}^{\mu}} + \left\lfloor \frac{m_{s,n_{CI}}^{(L)} \cdot N_{\mathrm{CCE},p}}{L \cdot M_{s,\max}^{(L)}} \right\rfloor + n_{CI} \right) mod \left\lfloor N_{\mathrm{CCE},p}/L \right\rfloor \right\} + i$$

where

for any CSS, $Y_{p,n_{s,f}^{\mu}} = 0$ ;

for a USS, $Y_{p,n_{s,f}^{\mu}} = \left( A_p \cdot Y_{p,n_{s,f}^{\mu}-1} \right) mod D$ , $Y_{p,-1} = n_{\mathrm{RNTI}} \neq 0$, $A_p$ = 39827 for *pmod*3 = *0*, $A_p$ = 39829 for *pmod*3 = 1,
$A_p$ = 39839 for *pmod*3 = 2, and *D* = 65537;
*i* = 0,···, *L* - 1;

$N_{\mathrm{CCE},p}$ is the number of CCEs, numbered from 0 to $N_{\mathrm{CCE},p}$ - 1, in CORESET *p* and, if any, per RB set;
$n_{CI}$ is the carrier indicator field value if the UE is configured with a carrier indicator field by *CrossCarrierScheduling-Config* for the serving cell on which PDCCH is monitored, except for scheduling of the serving cell from the same serving cell in which case $n_{CI}$ = 0; otherwise, including for any CSS, $n_{CI}$ = 0;

$m_{s,n_{CI}}^{(L)} = 0, \cdots, M_{s,n_{CI}}^{(L)} - 1$ , where $M_{s,n_{CI}}^{(L)}$ is the number of PDCCH candidates the UE is configured to monitor for aggregation level *L* of a search space set s for a serving cell corresponding to $n_{CI}$;

for any CSS, $M_{s,\max}^{(L)} = M_{s,0}^{(L)}$ ;

for a USS, $M_{s,\max}^{(L)}$ is the maximum of $M_{s,n_{CI}}^{(L)}$ over all configured $n_{CI}$ values for a CCE aggregation level *L* of search space set *s* ;
the RNTI value used for $n_{\mathrm{RNTI}}$ is the C-RNTI.
...

In $N_{\mathrm{CCE},p}$ used in the hashing function, both a method of applying based on a non-punctured CORESET#0 BW indicated in 3GPP TS 38.213 Table 13-1 based on the existing spec and a method of applying based on a punctured CORESET#0 BW if puncturing is applied may be possible.

[Method #H1] Method of determining $N_{\mathrm{CCE},p}$ based on CORESET#0 bandwidth

Method #H1 may be applied to both a case of applying the Method #1 (new CORESET#0 use method) and a case of applying the Method #2 (existing CORESET#0 reuse method). In the Method #H1, CORESET#0 bandwidth may mean a new CORESET#0 bandwidth when the Method #1 (new CORESET#0 use method) is applied and the existing CORESET#0 bandwidth (before performing the puncturing) when the Method #2 (existing CORESET#0 reuse method) is applied.

    (1) [Method #1 Application example] If a channel bandwidth is 15 PRBs, new CORESET#0 is 12 PRBs, and 3 OFDM symbols are used, $N_{\mathrm{CCE,p}}$ is 6 (= 2*3).
    (2) [Method #2 Application example] If a channel bandwidth is 15 PRBs, CORESET#0 is 24 PRBs, and 3 OFDM symbols are used, $N_{\mathrm{CCE,p}}$ is 12 (= 4*3).

[Method #H2] Method of determining $N_{\mathrm{CCE},p}$ based on PDCCH transmission/reception bandwidth

If the Method #2 (existing CORESET#0 reuse method) is applied in a narrowband, a "PDCCH transmission/reception bandwidth" may mean a bandwidth available for actual PDCCH transmission/reception within CORESET#0 bandwidth. If the Method #1 (new CORESET#0 use method) is applied, the "PDCCH transmission/reception bandwidth" may have the same value as the CORESET#0 bandwidth.

(1) [Method #1 Application example] If a channel bandwidth is 15 PRBs, new CORESET#0 is 12 PRBs, and 3 OFDM symbols are used, $N_{CCE,p}$ is 6 (= 2*3). (same as the application result of the Method #H1)

(2) [Method #2 Application example #1] If a channel bandwidth is 15 PRBs, CORESET#0 is 24 PRBs, and 3 OFDM symbols are used, $N_{CCE,p}$ is 6 (= 2*3) assuming that the PDCCH transmission/reception bandwidth is the same as the channel bandwidth of 15 PRBs.

(3) [Method #2 Application example #2] If a channel bandwidth is 20 PRBs, CORESET#0 is 24 PRBs, and 3 OFDM symbols are used, $N_{CCE,p}$ is 9 (= 3*3) assuming that the PDCCH transmission/reception bandwidth is the same as the channel bandwidth of 20 PRBs. In the same scenario, even if the PDCCH transmission/reception bandwidth is less than the channel bandwidth and is set to 18 PRBs which is the maximum value among multiples of 6 PRBs, the minimum unit of CORESET configuration, the same result may be obtained.

After determining $N_{CCE,p}$ based on the Method #H1 or the Method #H2, the BS/UE may calculate PDCCH CCE indexes for PDCCH transmission/reception using the hashing function stipulated in 3GPP TS 38.213 and then transmit/receive the PDCCH.

## [Description of claims related to UE]

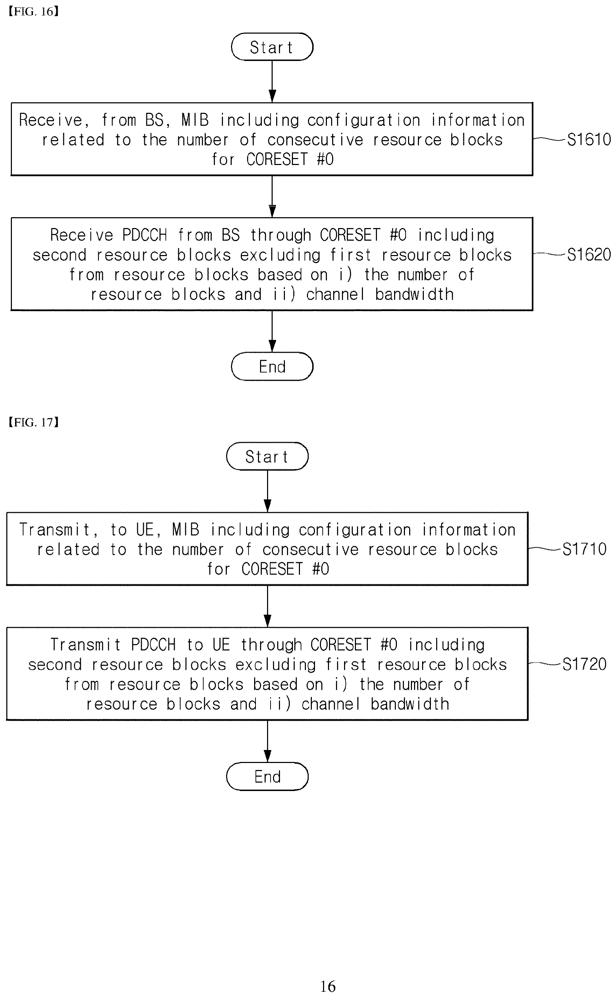

Below, the above-described embodiments are described in detail from a perspective of an operation of a UE with reference to FIG. 16. Methods to be described below are merely distinguished for convenience of explanation. Thus, as long as the methods are not mutually exclusive, it is obvious that partial configuration of any method can be substituted or combined with partial configuration of another method.

FIG. 16 illustrates an example of an operation process of a UE in a system applicable to the present disclosure.

In step S1610, a UE receives, from a base station (BS), a master information block (MIB) including configuration information related to a number of consecutive resource blocks for CORESET #0.

In step S1620, the UE receives, from the BS, a PDCCH through the CORESET #0 including second resource blocks excluding first resource blocks from the resource blocks based on i) the number of the resource blocks and ii) a channel bandwidth.

A puncturing based on a specific number of first resource blocks among the resource blocks may be assumed for the CORESET #0. The PDCCH may be received through one or more PDCCH candidates including control channel elements (CCEs) in a search space related to the CORESET #0. Indexes of the CCEs related to the one or more PDCCH candidates may be based on a number of the CCEs. The number of the CCEs may be based on the CORESET #0 before the puncturing.

According to various embodiments of the present disclosure, if a bandwidth based on the number of the resource blocks exceeds the channel bandwidth, the PDCCH may be received through the second resource blocks related to a bandwidth less than the channel bandwidth.

According to various embodiments of the present disclosure, the first resource blocks may be the specific number of resource blocks with a highest resource block index among the resource blocks.

According to various embodiments of the present disclosure, the channel bandwidth may be 3 MHz or 5 MHz.

According to various embodiments of the present disclosure, if the channel bandwidth is 3 MHz, a number of the second resource blocks may be 15.

According to various embodiments of the present disclosure, the CORESET #0 may be a CORESET related to a Type0-PDCCH common search space (CSS) set.

According to various embodiments of the present disclosure, the PDCCH received through the CORESET #0 may be related to system information block type 1 (SIB1).

According to various embodiments of the present disclosure, there is provided a user equipment (UE) in a wireless communication system. The UE may include a transceiver and at least one processor, and the at least one processor may be configured to perform the operation method of the UE based on FIG. 16.

According to various embodiments of the present disclosure, there is provided a device controlling a user equipment (UE) in a wireless communication system. The device may include at least one processor and at least one memory operably connected to the at least one processor. The at least one memory may be configured to store instructions performing the operation method of the UE based on FIG. 16 based on being executed by the at least one processor.

According to various embodiments of the present disclosure, there are provided one or more non-transitory computer readable mediums (CRMs) storing one or more instructions. The one or more instructions may be configured to perform operations based on being executed by one or more processors, and the operations may include the operation method of the UE based on FIG. 16.

**[Description of claims related to BS]**

Below, the above-described embodiments are described in detail from a perspective of an operation of a base station with reference to FIG. 17. Methods to be described below are merely distinguished for convenience of explanation. Thus, as long as the methods are not mutually exclusive, it is obvious that partial configuration of any method can be substituted or combined with partial configuration of another method.

FIG. 17 illustrates an example of an operation process of a base station in a system applicable to the present disclosure.

In step S1710, a base station (BS) transmits, to a user equipment (UE), a master information block (MIB) including configuration information related to a number of consecutive resource blocks for CORESET #0.

In step S1720, the BS transmits, to the UE, a PDCCH through the CORESET #0 including second resource blocks excluding first resource blocks from the resource blocks based on i) the number of the resource blocks and ii) a channel bandwidth.

A puncturing based on a specific number of first resource blocks among the resource blocks may be assumed for the CORESET #0.

The PDCCH may be transmitted through one or more PDCCH candidates including control channel elements (CCEs) in a search space related to the CORESET #0.

Indexes of the CCEs related to the one or more PDCCH candidates may be based on a number of the CCEs.

The number of the CCEs may be based on the CORESET #0 before the puncturing.

According to various embodiments of the present disclosure, if a bandwidth based on the number of the resource blocks exceeds the channel bandwidth, the PDCCH may be transmitted through the second resource blocks related to a bandwidth less than the channel bandwidth.

According to various embodiments of the present disclosure, the first resource blocks may be the specific number of resource blocks with a highest resource block index among the resource blocks.

According to various embodiments of the present disclosure, the channel bandwidth may be 3 MHz or 5 MHz.

According to various embodiments of the present disclosure, if the channel bandwidth is 3 MHz, a number of the second resource blocks may be 15.

According to various embodiments of the present disclosure, the CORESET #0 may be a CORESET related to a Type0-PDCCH common search space (CSS) set.

According to various embodiments of the present disclosure, the PDCCH received through the CORESET #0 may be related to system information block type 1 (SIB1).

According to various embodiments of the present disclosure, there is provided a base station in a wireless communication system. The base station may include a transceiver and at least one processor, and the at least one processor may be configured to perform the operation method of the BS based on FIG. 17.

According to various embodiments of the present disclosure, there is provided a device controlling a base station in a wireless communication system. The device may include at least one processor and at least one memory operably connected to the at least one processor. The at least one memory may be configured to store instructions performing the operation method of the BS based on FIG. 17 based on being executed by the at least one processor.

According to various embodiments of the present disclosure, there are provided one or more non-transitory computer readable mediums (CRMs) storing one or more instructions. The one or more instructions may be configured to perform operations based on being executed by one or more processors, and the operations may include the operation method of the BS based on FIG. 17.

**Wireless device applicable to the present disclosure**

Examples of wireless devices to which various embodiments of the present disclosure are applied are described below.

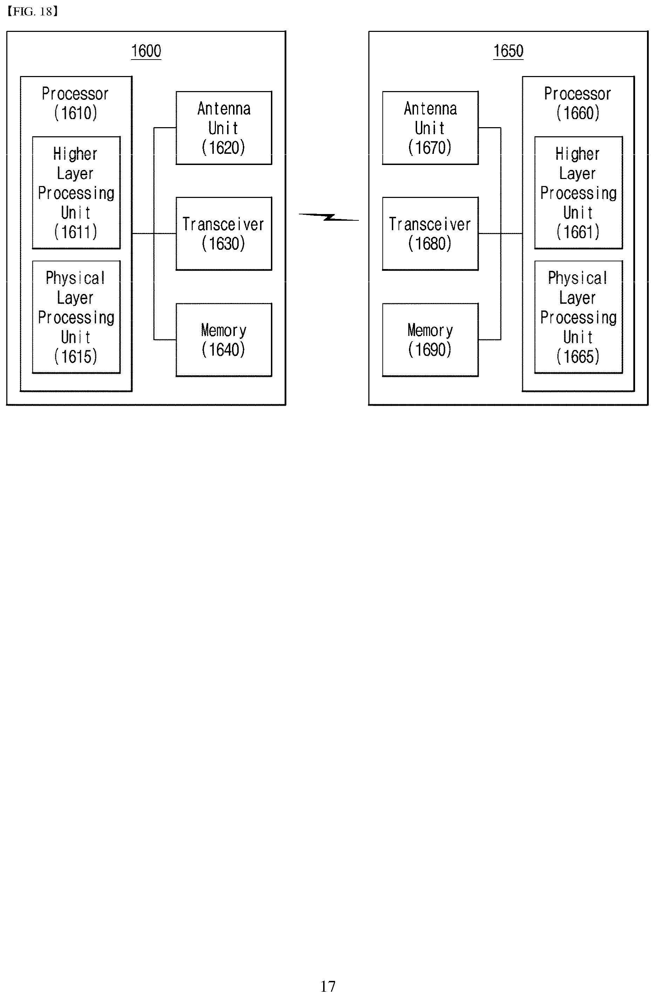

FIG. 18 illustrates an example of a structure of a first device and a second device in a system applicable to the present disclosure.

A first device 1600 may include a processor 1610, an antenna unit 1620, a transceiver 1630, and a memory 1640.

The processor 1610 may perform baseband-related signal processing and include a higher layer processing unit 1611 and a physical layer processing unit 1615. The higher layer processing unit 1611 may process operations of the MAC layer, the RRC layer, or higher layers. The physical layer processing unit 1615 may process the operation of the PHY layer. For example, if the first device 1600 is a base station (BS) device in BS-UE communication, the physical layer processing unit 1615 may perform uplink reception signal processing, downlink transmission signal processing, and the like. For example, if the first device 1600 is a first UE device in inter-UE communication, the physical layer processing unit 1615 may performs downlink reception signal processing, uplink transmission signal processing, sidelink transmission signal processing, and the like. The processor 1610 may control the overall operation of the first device 1600 in addition to performing the baseband-related signal processing.

The antenna unit 1620 may include one or more physical antennas and support MIMO transmission/reception if the antenna unit 1620 includes a plurality of antennas. The transceiver 1630 may include a radio frequency (RF) transmitter and an RF receiver. The memory 1640 may store information processed by the processor 1610 and software, operating systems, and applications related to the operation of the first device 1600. The memory 1640 may also include components such as a buffer.

The processor 1610 of the first device 1600 may be configured to implement the operation of the BS in the BS-UE communication (or the operation of the first UE device in the inter-UE communication) in embodiments described in the present disclosure.

The second device 1650 may include a processor 1660, an antenna unit 1670, a transceiver 1680, and a memory 1690.

The processor 1660 may perform baseband-related signal processing and include a higher layer processing unit 1661 and a physical layer processing unit 1665. The higher layer processing unit 1661 may process the operation of the MAC layer, the RRC layer, or higher layers. The physical layer processing unit 1665 may process the operation of the PHY layer. For example, if the second device 1650 is a UE device in BS-UE communication, the physical layer processing unit 1665 may perform downlink reception signal processing, uplink transmission signal processing, and the like. For example, if the second device 1650 is a second UE device in inter-UE communication, the physical layer processing unit 1665 may perform downlink reception signal processing, uplink transmission signal processing, sidelink reception signal processing, and the like. The processor 1660 may control the overall operation of the second device 1660 in addition to performing the baseband-related signal processing.

The antenna unit 1670 may include one or more physical antennas and support MIMO transmission/reception if the antenna unit 1670 includes a plurality of antennas. The transceiver 1680 may include an RF transmitter and an RF receiver. The memory 1690 may store information processed by the processor 1660 and software, operating systems, and applications related to the operation of the second device 1650. The memory 1690 may also include components such as a buffer.

The processor 1660 of the second device 1650 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 1600 and the second device 1650, and redundant descriptions are omitted.

The wireless communication technology implemented in the devices 1600 and 1650 according to the present disclosure can include various wireless communication technologies in addition to LTE, NR, and 6G.

The claims described in various embodiments of the present disclosure can be combined in various ways. For example, technical features of the method claims of various embodiments of the present disclosure can be combined and implemented as a device, and technical features of the device claims of various embodiments of the present disclosure can be combined and implemented as a method. In addition, the technical features of the method claims and the technical features of the device claims in various embodiments of the present disclosure can be combined and implemented as a device, and the technical features of the method claims and the technical features of the device claims in various embodiments of the present disclosure can be combined and implemented as a method.

## Claims

1. A method performed by a user equipment (UE) in a wireless communication system, the method comprising:

   receiving, from a base station (BS), a master information block (MIB) including configuration information related to a number of consecutive resource blocks for control resource set (CORESET) #0; and
   receiving, from the BS, a physical downlink control channel (PDCCH) through the CORESET #0 including second resource blocks excluding first resource blocks from the resource blocks based on i) the number of the resource blocks and ii) a channel bandwidth,
   wherein a puncturing based on a specific number of the first resource blocks among the resource blocks is assumed for the CORESET #0,
   wherein the PDCCH is received through one or more PDCCH candidates including control channel elements (CCEs) in a search space related to the CORESET #0,
   wherein indexes of the CCEs related to the one or more PDCCH candidates are based on a number of the CCEs, and
wherein the number of the CCEs is based on the CORESET #0 before the puncturing.

2. The method of claim 1, wherein, based on a bandwidth based on the number of the resource blocks exceeding the channel bandwidth, the PDCCH is received through the second resource blocks related to a bandwidth less than the channel bandwidth.

3. The method of claim 1, wherein the first resource blocks are the specific number of resource blocks with a highest resource block index among the resource blocks.

4. The method of claim 1, wherein the channel bandwidth is 3 MHz or 5 MHz.

5. The method of claim 4, wherein, based on the channel bandwidth being 3 MHz, a number of the second resource blocks is 15.

6. The method of claim 1, wherein the CORESET #0 is a CORESET related to a Type0-PDCCH common search space (CSS) set.

7. The method of claim 1, wherein the PDCCH received through the CORESET #0 is related to system information block type 1 (SIB1).

8. A method performed by a base station (BS) in a wireless communication system, the method comprising:

transmitting, to a user equipment (UE), a master information block (MIB) including configuration information related to a number of consecutive resource blocks for control resource set (CORESET) #0; and
transmitting, to the UE, a physical downlink control channel (PDCCH) through the CORESET #0 including second resource blocks excluding first resource blocks from the resource blocks based on i) the number of the resource blocks and ii) a channel bandwidth,
wherein a puncturing based on a specific number of the first resource blocks among the resource blocks is assumed for the CORESET #0,
wherein the PDCCH is transmitted through one or more PDCCH candidates including control channel elements (CCEs) in a search space related to the CORESET #0,
wherein indexes of the CCEs related to the one or more PDCCH candidates are based on a number of the CCEs, and
wherein the number of the CCEs is based on the CORESET #0 before the puncturing.

9. The method of claim 8, wherein, based on a bandwidth based on the number of the resource blocks exceeding the channel bandwidth, the PDCCH is transmitted through the second resource blocks related to a bandwidth less than the channel bandwidth.

10. The method of claim 8, wherein the first resource blocks are the specific number of resource blocks with a highest resource block index among the resource blocks.

11. The method of claim 8, wherein the channel bandwidth is 3 MHz or 5 MHz.

12. The method of claim 11, wherein, based on the channel bandwidth being 3 MHz, a number of the second resource blocks is 15.

13. The method of claim 8, wherein the CORESET #0 is a CORESET related to a Type0-PDCCH common search space (CSS) set.

14. The method of claim 8, wherein the PDCCH received through the CORESET #0 is related to system information block type 1 (SIB1).

15. A user equipment in a wireless communication system, the UE comprising:

a transceiver;
at least one processor; and

at least one memory operably connectable to the at least one processor,
wherein the at least one memory is configured to store instructions performing operations based on being executed by the at least one processor, and
wherein the operations comprise all steps of a method according to any one of claims 1 to 7.

16. A base station in a wireless communication system, the BS comprising:

a transceiver;
at least one processor; and
at least one memory operably connectable to the at least one processor,
wherein the at least one memory is configured to store instructions performing operations based on being executed by the at least one processor, and
wherein the operations comprise all steps of a method according to any one of claims 8 to 14.

17. A control device controlling a user equipment in a wireless communication system, the control device comprising:

at least one processor; and
at least one memory operably connected to the at least one processor,
wherein the at least one memory is configured to store instructions performing operations based on being executed by the at least one processor, and
wherein the operations comprise all steps of a method according to any one of claims 1 to 7.

18. A control device controlling a base station in a wireless communication system, the control device comprising:

at least one processor; and
at least one memory operably connected to the at least one processor,
wherein the at least one memory is configured to store instructions performing operations based on being executed by the at least one processor, and
wherein the operations comprise all steps of a method according to any one of claims 8 to 14.

19. One or more non-transitory computer readable mediums storing one or more instructions,

wherein the one or more instructions are configured to perform operations based on being executed by one or more processors, and
wherein the operations comprise all steps of a method according to any one of claims 1 to 7.

20. One or more non-transitory computer readable mediums storing one or more instructions,

wherein the one or more instructions are configured to perform operations based on being executed by one or more processors, and
wherein the operations comprise all steps of a method according to any one of claims 8 to 14.

[FIG. 1]

INITIAL
CELL
SEARCH

SYSTEM
INFORMATION
RECEPTION

RANDOM ACCESS PROCEDURE

GENERAL
DL/UL Tx/Rx

| PSS-SSS& [DLRS]& PBCH | PDCCH/ PDSCH (BCCH) | PRACH | PDCCH/ PDSCH | PUSCH | PDCCH/ PDSCH | PDCCH/ PDSCH | PUSCH/ PUCCH |

S11   S12   S13   S14   S15   S16   S17   S18

· DL/UL ACK/NACK
· UE CQI/PMI RI REPORT
  USING PUSCH AND PUCCH

1

【FIG. 2】

【FIG. 3】

Resource grid

A carrier
(up to 3300
subcarriers,
i.e.,275 RBs)

A BWP

1RB=12
subcarriers

1 RE

1 subcarrier

1 symbol

l=0 · · ·

k=0

3

【FIG. 4】

1 slot

DL control region

DL data or UL data region

UL control region

4

【FIG. 5】

【FIG. 6】

【FIG. 7】

【FIG. 8】

Not transmitted or punctured

Punctured PBCH    Channel BW

Not transmitted or punctured

Frequency

Time

8

【FIG. 9】

【FIG. 10】

10

【FIG. 11】

PSS

PBCH

SSS

PBCH

PBCH

PBCH

12-RB
Punctured PBCH

Channel BW
(15 PRB)

Frequency

Time

11

【FIG. 12】

【FIG. 13】

15-RB
Punctured PBCH

Channel BW
(15 PRB)

PBCH

PSS

PBCH

SSS

PBCH

PBCH

Frequency

Time

13

【FIG. 14】

【FIG. 15】

12-RB Punctured PBCH

CORESET #0

Channel BW

Frequency

Time

[FIG. 16]

```
                    ( Start )
                        │
                        ▼
┌─────────────────────────────────────────────────────┐
│ Receive, from BS, MIB including configuration        │
│   information related to the number of consecutive   │──S1610
│   resource blocks for CORESET #0                     │
└─────────────────────────────────────────────────────┘
                        │
                        ▼
┌─────────────────────────────────────────────────────┐
│ Receive PDCCH from BS through CORESET #0 including   │
│ second resource blocks excluding first resource      │──S1620
│ blocks from resource blocks based on i) the number   │
│ of resource blocks and ii) channel bandwidth         │
└─────────────────────────────────────────────────────┘
                        │
                        ▼
                    ( End )
```

[FIG. 17]

```
                    ( Start )
                        │
                        ▼
┌─────────────────────────────────────────────────────┐
│ Transmit, to UE, MIB including configuration         │
│  information related to the number of consecutive    │──S1710
│  resource blocks for CORESET #0                      │
└─────────────────────────────────────────────────────┘
                        │
                        ▼
┌─────────────────────────────────────────────────────┐
│ Transmit PDCCH to UE through CORESET #0 including    │
│ second resource blocks excluding first resource      │──S1720
│ blocks from resource blocks based on i) the number   │
│ of resource blocks and ii) channel bandwidth         │
└─────────────────────────────────────────────────────┘
                        │
                        ▼
                    ( End )
```

16

【FIG. 18】

## INTERNATIONAL SEARCH REPORT

| International application No. |
|---|
| **PCT/KR2024/006410** |

| A. | CLASSIFICATION OF SUBJECT MATTER |
|---|---|
| | **H04L 5/00**(2006.01)i; **H04W 72/232**(2023.01)i |

According to International Patent Classification (IPC) or to both national classification and IPC

| B. | FIELDS SEARCHED |
|---|---|

Minimum documentation searched (classification system followed by classification symbols)

H04L 5/00(2006.01); H04J 11/00(2006.01); H04W 74/00(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CORESET #0(control resource set #0), MIB(master information block), 자원 블록 (resource block), 채널 대역폭(channel bandwidth), PDCCH(physical downlink control channel), CCE(control channel element), 펑처링(puncturing), 탐색 공간(search space), 협대역(narrow band)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2023-054859 A1 (SAMSUNG ELECTRONICS CO., LTD.) 06 April 2023 (2023-04-06)<br>See paragraphs [0126] and [0200]; and claim 2. | 1-20 |
| Y | LENOVO. Enhancements to operate NR on dedicated spectrum less than 5 MHz. R1-2300859, 3GPP TSG RAN WG1 #112. Athens, Greece. 17 February 2023.<br>See sections 1 and 2.2. | 1-20 |
| A | NTT DOCOMO, INC. Discussion on simulations and assumptions for further UE complexity reduction. R1-2204390, 3GPP TSG RAN WG1 #109-e. 28 April 2022.<br>See sections 1-2.2.3. | 1-20 |
| A | FUTUREWEI. Analysis of complexity reduction techniques for RedCap UEs in Rel-18. R1-2205741, 3GPP TSG RAN WG1 Meeting #110. Toulouse, France. 12 August 2022.<br>See sections 1-2.6. | 1-20 |
| A | US 2022-0174739 A1 (APPLE INC.) 02 June 2022 (2022-06-02)<br>See paragraphs [0026]-[0205]; and figures 1-14. | 1-20 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 September 2024** | **04 September 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/006410**

| Patent document cited in search report | | | Publication date (day/month/year) | Patent family member(s) | | | Publication date (day/month/year) |
|---|---|---|---|---|---|---|---|
| WO | 2023-054859 | A1 | 06 April 2023 | EP | 4391683 | A1 | 26 June 2024 |
| | | | | KR | 10-2023-0046173 | A | 05 April 2023 |
| | | | | US | 2024-0137881 | A1 | 25 April 2024 |
| | | | | US | 2024-0236889 | A9 | 11 July 2024 |
| US | 2022-0174739 | A1 | 02 June 2022 | CN | 114026945 | A | 08 February 2022 |
| | | | | WO | 2020-227068 | A1 | 12 November 2020 |

Form PCT/ISA/210 (patent family annex) (July 2022)